(19) Europäisches Patentamt
European Patent Office
Office européen des brevets

(11) **EP 4 136 322 B1**

(12) **EUROPEAN PATENT SPECIFICATION**

(45) Date of publication and mention
of the grant of the patent:
**15.10.2025 Bulletin 2025/42**

(51) International Patent Classification (IPC):
**E21B 49/00** (2006.01)   **E21B 43/00** (2006.01)
**E21B 43/16** (2006.01)

(21) Application number: **21788482.4**

(22) Date of filing: **16.04.2021**

(52) Cooperative Patent Classification (CPC):
**E21B 43/00; E21B 43/16;** E21B 2200/20

(86) International application number:
**PCT/US2021/027808**

(87) International publication number:
**WO 2021/212059 (21.10.2021 Gazette 2021/42)**

(54) **COMPOSITIONAL RESERVOIR SIMULATION**

KOMPOSITRESERVOIRSIMULATION

SIMULATION DE RÉSERVOIR DE COMPOSITION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.04.2020 US 202063011414 P**

(43) Date of publication of application:
**22.02.2023 Bulletin 2023/08**

(73) Proprietors:
• **Chevron U.S.A. Inc.
San Ramon, CA 94583 (US)**
• **Services Pétroliers Schlumberger
75007 Paris (FR)**
Designated Contracting States:
**FR**
• **GeoQuest Systems B.V.
2586 BJ The Hague (NL)**
Designated Contracting States:
**AL AT BE BG CH CY CZ DE DK EE ES FI GB GR
HR HU IE IS IT LI LT LU LV MC MK MT NL NO PL
PT RO RS SE SI SK SM TR**

(72) Inventors:
• **LEE, Seong Hee
Humble, Texas 77396 (US)**
• **TENE, Matei
Oxfordshire, OT Oxfordshire OX14 4RU (GB)**
• **DU, Song
San Ramon, California 94583-2324 (US)**
• **WEN, Xian-Huan
San Ramon, California 94583-2324 (US)**
• **EFENDIEV, Yalchin
College Station, Texas 77845 (US)**

(74) Representative: **Haseltine Lake Kempner LLP
One Portwall Square
Portwall Lane
Bristol BS1 6BH (GB)**

(56) References cited:
**US-A1- 2002 177 986    US-A1- 2002 177 986
US-A1- 2010 004 908    US-A1- 2010 305 911
US-A1- 2019 095 792**

• **MONCORGE A ET AL: "Sequential Fully Implicit
Formulation for Compositional Simulation using
Natural Variables", ARXIV.ORG, CORNELL
UNIVERSITY LIBRARY, 201 OLIN LIBRARY
CORNELL UNIVERSITY ITHACA, NY 14853, 25
April 2018 (2018-04-25), XP081137427, DOI:
10.1016/J.JCP.2018.05.048**
• **MONCORGÉ A ET AL: "Modified sequential fully
implicit scheme for compositional flow
simulation", JOURNAL OF COMPUTATIONAL
PHYSICS, LONDON, GB, vol. 337, 20 February
2017 (2017-02-20), pages 98 - 115, XP029948889,
ISSN: 0021-9991, [retrieved on 20240319], DOI:
10.1016/J.JCP.2017.02.032**

## Description

### TECHNICAL FIELD

The present disclosure relates to reservoir simulation in the hydrocarbon industry, and more particularly to, a conservative, sequential fully implicit method for compositional reservoir simulation. Reference may be made to US 2002/177986 A1 which relates to a simulation method and system using component-phase transformations. Reference may be made to MONCORGE A ET AL: "Sequential Fully Implicit Formulation for Compositional Simulation using Natural Variables", ARXIV.ORG, CORNELL UNIVERSITY LIBRARY, 201 OLINLIBRARY CORNELL UNIVERSITY ITHACA, NY 14853, [Online] 25 April 2018. Reference may be made to MONCORGE A ET AL: "Modified sequential fully implicit scheme for compositional flow simulation", JOURNAL OF COMPUTATIONAL PHYSICS, LONDON, GB, [Online] vol. 337, 20 February 2017 (2017-02-20), pages 98-115.

### BACKGROUND

The hydrocarbon industry retrieves hydrocarbons that are trapped in subsurface reservoirs. These hydrocarbons can be recovered by drilling wells into the reservoirs such that hydrocarbons are able to flow from the reservoirs into the wellbores and up to the surface. The geology of a reservoir has a large impact on the production rate at which hydrocarbons are able to flow into a wellbore. A large amount of effort has therefore been dedicated to developing reservoir simulation techniques to better predict how fluid will flow within a reservoir.

Complex physical processes in porous media (e.g., gas injection, miscible flooding, enhanced oil recovery, thermal recovery of heavy oil, etc.) can be effectively modeled by compositional reservoir simulation. Commercial reservoir simulators commonly adapt the governing equations in compositional formulation. Numerical simulation of compositional reservoir models, as a result, becomes an important practical tool in the management and optimization of oil and gas reservoirs. Commercial simulators usually employ an Equation of State (EoS) to calculate phase equilibrium. The EoS', however, are highly nonlinear, and the convergence of solution is strongly dependent on the initial guess of the equilibrium factors (the ratio of gas and liquid mole fractions for each component). The cubic EoS, e.g., Peng-Robinson and Soave-Redlich-Kwong, often yields trivial or non-convergent solution near a critical point or from an inaccurate initial guess of equilibrium factors. It used to be a challenge to identify the phase state, single or multi-phase. Stability criterion making the phase equilibrium calculation more stable and efficient (e.g., minimizing Gibbs free energy) have been developed. Many algorithms have been proposed in optimizing these calculations, e.g., successive substitution with a Newton method, reduced variables method, tie-line method, etc. The phase equilibrium without phase transition is solved efficiently in a commercial reservoir simulator.

Others have proposed generalized phase equilibrium calculation under various constraints of thermodynamic state variables (e.g., isentropic, isenthalpic and fixed volumetric flash computations). In conventional compositional reservoir simulation, the isothermal flash calculation with fixed pressure is commonly applied. In porous media, the pore volume is constrained. As a result, the fluid volume (consequent saturations) will not satisfy the volume constraints. This may result in volume and/or mass errors in conventional compositional simulation.

In the fully implicit compositional formulation with natural variables, the thermodynamic equilibrium condition is commonly included as an equality constraint of phase fugacities, while the total volume conservation is honored through the saturation constraint. All such algorithms require an accurate identification of phase state for numerical convergence. If a time-step involves phase transition, it becomes challenging to estimate accurate phase state and equilibrium constants. The nonlinear system of equations for primary variables are iteratively solved by a Newton method. In a sequential fully implicit formulation, the pressure and transport equations, coupled with thermodynamic equilibrium are solved in sequence. Traditional sequential methods cannot exactly honor the volume or mass conservation. As a result, the fluid volume does not exactly satisfy the volume constraints, particularly in phase transition with a large volume change.

Many commercial reservoir models exhibit numerical instabilities during simulation that have not been fully understood and analyzed. Even though the Fully Implicit Method (FIM) is numerically more dispersive than the Implicit Pressure and Explicit Saturation (IMPES), the former is widely used in practical applications because of its better numerical stability. Unfortunately, since all the primary variables are coupled in FIM, it becomes increasingly difficult to extend conventional reservoir simulators to include additional new physics (surfactants, thermal effect, geomechanics, etc.). Furthermore, the complexity of mathematical structure, makes it challenging to understand the numerical instability.

In development of Multiscale Finite Volume Method, there has been a renewed interest in sequential fully implicit method (SFI). A sequential algorithm employs modular programming design and provides natural physical interpretation. Nevertheless, as the numerical stability becomes a daunting challenge for the complex multi-component fluid flow with nonlinear phase equilibrium computation, most commercial compositional simulators adapt FIM.

It has also been demonstrated that numerical instability in multiphase flow often occurs due to the discontinuous upwinding scheme in the conventional phase-potential based upwinding scheme. This was not obvious to simulation engineers and mathematicians for many years because of the complex structure of a fully coupled large matrix system in the fully implicit formulation. In a sequential method, it becomes rather straightforward to examine numerical instabilities. For example, numerical stability can significantly be improved by employing a hybrid upwind scheme.

Stable, convergent sequential fully implicit schemes have recently been derived in the development of compositional multi-scale algorithms. In many cases, however, the algorithms become too expensive. Researchers have also found that the sequential algorithm has been unable to satisfy all the governing equations and constraints. To mitigate the model inconsistency and numerical difficulties, the volume constraints need to be relaxed. It clearly indicates an inconsistency of the governing equations for phase equilibrium and volume and mass conservation.

In the conventional compositional formulation, the transport equations are derived for each component, coupled with the phase equilibrium equation of state. The instantaneous phase equilibrium is generally assumed. As the governing equations for compositional simulation are written for each molar component, the number of independent variables becomes large as the number of hydrocarbon components ($N_c$) increases (i.e., Gibbs' phase rule: $2 + N_c - N_p$ (number of phases)). The optimal selection of primary and secondary variables becomes complex and dependent on the system.

A new method to interpret the complex physical processes in porous media in a simple and natural way is still needed.

## SUMMARY

The present invention is defined by the appended independent claims to which reference should now be made. Specific embodiments are defined in the dependent claims. Various embodiments of the present disclosure may include systems, methods, and non-transitory computer readable medium configured to perform compositional reservoir simulation on a model of a subterranean reservoir partitioned into a plurality of cells each representing a reservoir volume associated with one or more reservoir characteristics.

## DESCRIPTION OF THE DRAWINGS

Fig. 1 illustrates a flowchart of a method for compositional reservoir simulation, in accordance with some embodiments.

Fig. 2 is a block diagram illustrating a system for performing compositional reservoir simulation, in accordance with some embodiments.

Fig. 3 illustrates an example phase behavior of a three-component system in a constant composition expansion highlighting gas and oil volume changes (3A) and component distribution (3B).

Fig. 4 illustrates cell pressure (4A), saturations, $S_o$ and $S_g$, (4B), and well production rates (4C) for an example of the primary depletion process in a single cell modeled by VT-Flash and modified PT-Flash.

Fig. 5 illustrates cell pressure (5A), saturations, $S_o$ and $S_g$, (5B), and well production rates (5C) with thermodynamic flux for the example single cell model described in Fig. 4.

Fig. 6 illustrates an example ten-cell model with production and injection wells.

Fig. 7 illustrates pressure development (7A), injection rate, production rate and thermodynamic flux for early time (7B), and injection rate, production rate and thermodynamic flux in simulation (7C) for an example model with one injection well and one production well.

Fig. 8 illustrates saturation distributions for water, $S_w$ (8A); for oil, $S_o$ (8B), and for gas, $S_g$ (8C) for the example model with one injection well and one production well in Fig. 7.

Fig. 9 illustrates an example four-cell model with production and injection wells.

Fig. 10 illustrates gas saturation development (10A), saturation distribution (10B), and thermodynamic flux at cell 1 (10C) during nonlinear iterations for the example four-cell model described in Fig. 9.

Fig. 11 illustrates cell pressure at t = 100 days (11A), $S_g$ at t = 100 days (11B), and $S_g$ at t = 400 days (11C) for an example 2-d model with no gravity effect.

Fig. 12 illustrates cell pressure at t = 100 days (12A), $S_g$ at t = 100 days (12B), and $S_g$ at t = 400 days (12C) for an example 2-d model with gravity effect.

## DETAILED DESCRIPTION

**TERMINOLOGY:** The following terms will be used throughout the specification and will have the following meanings unless otherwise indicated.

Formation: Hydrocarbon exploration processes, hydrocarbon recovery (also referred to as hydrocarbon production) processes, or any combination thereof may be performed on a formation. The formation refers to practically any volume under a surface. For example, the formation may be practically any volume under a terrestrial surface (e.g., a land surface), practically any volume under a seafloor, etc. A water column may be above the formation, such as in marine hydrocarbon exploration, in marine hydrocarbon recovery, etc. The formation may be onshore. The formation may be offshore (e.g., with shallow water or deep water above the formation). The formation may include faults, fractures, overburdens, underburdens, salts, salt welds, rocks, sands, sediments, pore space, etc. Indeed, the formation may include practically any geologic point(s) or volume(s) of interest (such as a survey area) in some embodiments.

The formation may include hydrocarbons, such as liquid hydrocarbons (also known as oil or petroleum), gas hydrocarbons (e.g., natural gas), solid hydrocarbons (e.g., asphaltenes or waxes), a combination of hydrocarbons (e.g., a combination of liquid hydrocarbons, gas hydrocarbons, and solid hydrocarbons), etc. Light crude oil, medium oil, heavy crude oil, and extra heavy oil, as defined by the American Petroleum Institute (API) gravity, are examples of hydrocarbons. Examples of hydrocarbons may include oil, natural gas, kerogen, bitumen, clathrates (also referred to as hydrates), etc. The hydrocarbons may be discovered by hydrocarbon exploration processes.

The formation may also include at least one wellbore. For example, at least one wellbore may be drilled into the formation in order to confirm the presence of the hydrocarbons. As another example, at least one wellbore may be drilled into the formation in order to recover (also referred to as produce) the hydrocarbons. The hydrocarbons may be recovered from the entire formation or from a portion of the formation. For example, the formation may be divided into one or more hydrocarbon zones, and hydrocarbons may be recovered from each desired hydrocarbon zone. One or more of the hydrocarbon zones may even be shut-in to increase hydrocarbon recovery from a hydrocarbon zone that is not shut-in.

The formation, the hydrocarbons, or any combination thereof may also include non-hydrocarbon items. For example, the non-hydrocarbon items may include connate water, brine, tracers, items used in enhanced oil recovery or other hydrocarbon recovery processes, items from other treatments, etc.

In short, each formation may have a variety of characteristics, such as petrophysical rock properties, reservoir fluid properties, reservoir conditions, hydrocarbon properties, or any combination thereof. For example, each formation (or even zone or portion of the formation) may be associated with one or more of: temperature, porosity, salinity, permeability, water composition, mineralogy, hydrocarbon type, hydrocarbon quantity, reservoir location, pressure, etc. Indeed, those of ordinary skill in the art will appreciate that the characteristics are many, including, but not limited to: shale gas, shale oil, tight gas, tight oil, tight carbonate, carbonate, vuggy carbonate, unconventional (e.g., a rock matrix with an average pore size less than 1 micrometer), diatomite, geothermal, mineral, metal, etc.

The terms "formation", "subsurface formation", "hydrocarbon-bearing formation", "reservoir", "subsurface reservoir", "subsurface region of interest", "subsurface volume of interest", and the like may be used synonymously. The terms "formation", "hydrocarbons", and the like are not limited to any description or configuration described herein.

Wellbore: A wellbore refers to a single hole, usually cylindrical, that is drilled into the formation for hydrocarbon exploration, hydrocarbon recovery, surveillance, or any combination thereof. The wellbore is usually surrounded by the formation and the wellbore may be configured to be in fluidic communication with the formation (e.g., via perforations). The wellbore may also be configured to be in fluidic communication with the surface, such as in fluidic communication with a surface facility that may include oil/gas/water separators, gas compressors, storage tanks, pumps, gauges, sensors, meters, pipelines, etc.

The wellbore may be used for injection (sometimes referred to as an injection wellbore) in some embodiments. The wellbore may be used for production (sometimes referred to as a production wellbore) in some embodiments. The wellbore may be used for a single function, such as only injection, in some embodiments. The wellbore may be used for a plurality of functions, such as production then injection (or vice versa), in some embodiments. The use of the wellbore may also be changed, for example, a particular wellbore may be turned into an injection wellbore after a different previous use as a production wellbore. The wellbore may be drilled amongst existing wellbores, for example, as an infill wellbore. A wellbore may be utilized for injection and a different wellbore may be used for hydrocarbon production, such as in the scenario that hydrocarbons are swept from at least one injection wellbore towards at least one production wellbore and up the at least one production wellbore towards the surface for processing. On the other hand, a single wellbore may be utilized for injection and hydrocarbon production, such as a single wellbore used for hydraulic fracturing and hydrocarbon production. A plurality of wellbores (e.g., tens to hundreds of wellbores) are often used in a field to recover hydrocarbons.

The wellbore may have straight, directional, or a combination of trajectories. For example, the wellbore may be a vertical wellbore, a horizontal wellbore, a multilateral wellbore, an inclined wellbore, a slanted wellbore, etc. The wellbore may include a change in deviation. As an example, the deviation is changing when the wellbore is curving. In a horizontal wellbore, the deviation is changing at the curved section (sometimes referred to as the heel). As used herein, a horizontal section of a wellbore is drilled in a horizontal direction (or substantially horizontal direction). For example, a horizontal section of a wellbore is drilled towards (or substantially in parallel with) the bedding plane direction. A horizontal section of a wellbore may be, but is not limited to, a horizontal section of a horizontal wellbore. On the other hand, a vertical wellbore is drilled in a vertical direction (or substantially vertical direction). For example, a vertical wellbore is drilled perpendicular (or substantially perpendicular) to the bedding plane direction.

The wellbore may include a plurality of components, such as, but not limited to, a casing, a liner, a tubing string, a heating element, a sensor, a packer, a screen, a gravel pack, artificial lift equipment (e.g., an electric submersible pump (ESP)), etc. The "casing" refers to a steel pipe cemented in place during the wellbore construction process to stabilize the wellbore. The "liner" refers to any string of casing in which the top does not extend to the surface but instead is suspended from inside the previous casing. The "tubing string" or simply "tubing" is made up of a plurality of tubulars (e.g., tubing, tubing joints, pup joints, etc.) connected together. The tubing string is lowered into the casing or the liner for injecting a fluid into the formation, producing a fluid from the formation, or any combination thereof. The casing may be cemented in place, with the cement positioned in the annulus between the formation and the outside of the casing. The wellbore may also include any completion hardware that is not discussed separately. If the wellbore is drilled offshore, the wellbore may include some of the previous components plus other offshore components, such as a riser.

The wellbore may also include equipment to control fluid flow into the wellbore, control fluid flow out of the wellbore, or any combination thereof. For example, each wellbore may include a wellhead, a blowout preventer (BOP), chokes, valves, or other control devices. These control devices may be located on the surface, under the surface (e.g., downhole in the wellbore), or any combination thereof. In some embodiments, the same control devices may be used to control fluid flow into and out of the wellbore. In some embodiments, different control devices may be used to control fluid flow into and out of the wellbore. In some embodiments, the rate of flow of fluids through the wellbore may depend on the fluid handling capacities of the surface facility that is in fluidic communication with the wellbore. The control devices may also be utilized to control the pressure profile of the wellbore.

The equipment to be used in controlling fluid flow into and out of the wellbore may be dependent on the wellbore, the formation, the surface facility, etc. However, for simplicity, the term "control apparatus" is meant to represent any wellhead(s), BOP(s), choke(s), valve(s), fluid(s), and other equipment and techniques related to controlling fluid flow into and out of the wellbore.

The wellbore may be drilled into the formation using practically any drilling technique and equipment known in the art, such as geosteering, directional drilling, etc. Drilling the wellbore may include using a tool, such as a drilling tool that includes a drill bit and a drill string. Drilling fluid, such as drilling mud, may be used while drilling in order to cool the drill tool and remove cuttings. Other tools may also be used while drilling or after drilling, such as measurement-while-drilling (MWD) tools, seismic-while-drilling (SWD) tools, wireline tools, logging-while-drilling (LWD) tools, or other downhole tools. After drilling to a predetermined depth, the drill string and the drill bit are removed, and then the casing, the tubing, etc. may be installed according to the design of the wellbore.

The equipment to be used in drilling the wellbore may be dependent on the design of the wellbore, the formation, the hydrocarbons, etc. However, for simplicity, the term "drilling apparatus" is meant to represent any drill bit(s), drill string(s), drilling fluid(s), and other equipment and techniques related to drilling the wellbore.

The term "wellbore" may be used synonymously with the terms "borehole," "well," or "well bore." The term "wellbore" is not limited to any description or configuration described herein.

Hydrocarbon recovery: Hydrocarbons may be recovered (sometimes referred to as produced) from the formation using primary recovery (e.g., by relying on natural reservoir energy to recover the hydrocarbons), secondary recovery (e.g., by using water injection (also referred to as waterflooding) or natural gas injection to recover hydrocarbons), enhanced oil recovery (EOR), or any combination thereof. Enhanced oil recovery or simply EOR refers to techniques for increasing the amount of hydrocarbons that may be extracted from the formation, such as, but not limited to, chemical injection (sometimes referred to as chemical enhanced oil recovery (CEOR) or thermal recovery (which includes, for example, cyclic steam and steam flooding). Enhanced oil recovery may also be referred to as tertiary oil recovery. Secondary recovery is sometimes just referred to as improved oil recovery or enhanced oil recovery. The hydrocarbons may be recovered from the formation using a fracturing process. For example, a fracturing process may include fracturing using electrodes, fracturing using fluid (oftentimes referred to as hydraulic fracturing), etc. The hydrocarbons may be recovered from the formation using radio frequency (RF) heating. Other hydrocarbon recovery processes may also be utilized to recover the hydrocarbons. Furthermore, those of ordinary skill in the art will appreciate that one hydrocarbon recovery process may also be used in combination with at least one other recovery process or subsequent to at least one other recovery process. Moreover, hydrocarbon recovery processes may also include stimulation or other treatments.

Simulator: The term "simulator" or "reservoir simulator" refers to a specialized computer system that utilizes a model (e.g., physics model) for mathematically representing or modeling an entity or environment (e.g., reservoir or formation volume) under one or more scenarios (e.g., analyzing or estimating the performance or behavior of a hydrocarbon formation to forecast oil recovery based on various producing schemes). As used herein, the term simulator can be used to investigate interactions of reservoir fluid flows, chemical reactions, thermal impacts, or other mechanisms or displacement processes impacting a hydrocarbon reservoir or areas surrounding the hydrocarbon reservoir (e.g., over-burden, under-burden, side-burden). For example, reservoir simulators can be considered as a diagnostics tool that can be used for making decisions on the development of new fields, the location of infill wells, the implementation of enhanced recovery projects, or other development strategies (i.e., for determining an optimal production scheme to economically optimize hydrocarbon recovery from a reservoir). Many different scenarios can be modeled in a reservoir simulator to generate accurate field performance or production forecasts to help make investment or operational decisions.

Advantageously, embodiments consistent with this disclosure may be utilized for reservoir modeling, estimating hydrocarbon in place, or any combination thereof. For example, fractures categorized as naturally occurring fractures may be utilized in reservoir models and fractures categorized as non-naturally occurring fractures may be excluded in the reservoir models. By doing so, reservoir modeling and/or simulation may be more accurate, may be computationally faster, may use fewer computer resources, etc. The new results may improve the understanding of the regional fracture system and lead to more accurate fracture network models. The reservoir modeling and/or simulation may be utilized to make decisions regarding well spacing, well location, well type (e.g., vertical trajectory, horizontal trajectory, high angle trajectory, etc.), well pad, etc.

Advantageously, embodiments consistent with this disclosure may be utilized in the context of drilling. For example, the embodiments may be utilized to adjust the mud weight of the drilling mud, adjust the components of the drilling mud, address drilling mud type, etc. to reduce or prevent non-naturally occurring fractures. Indeed, if drilling mud A is leading to non-naturally occurring fractures based on the categorization, then the drilling mud A may be adjusted or replaced with drilling mud B (e.g., that is less dense than drilling mud A) to reduce or prevent non-naturally occurring fractures. As another example, if a particular portion of the subsurface formation includes a predetermined quantity of non-naturally occurring fractures based on the categorization, the trajectory of the wellbore may be adjusted to steer away from the non-naturally occurring fractures to improve or maintain wellbore stability. As another example, if a particular portion of the subsurface includes a predetermined quantity of naturally occurring fractures based on the categorization, at least one new well may be drilled in a location and with a trajectory to take advantage of that particular portion having naturally occurring fractures. Of note, practically any type of drilling fluid, including conductive and non-conductive mud, are contemplated herein, as vendors design different tools for different mud systems. Similarly, practically any logging operation methods, including wireline logging and logging while drilling (LWD), are contemplated herein, as vendors design different tools for different operations.

Advantageously, embodiments consistent with this disclosure may be utilized to generate production forecasts for practically any type of hydrocarbon such as, but not limited to, oil production and gas production. Embodiments consistent with this disclosure may be utilized to generate production forecasts for practically any type of production such as, but not limited to, cumulative production and estimated ultimate recovery (EUR). The embodiments consistent with this disclosure may be utilized to forecast hydrocarbon production of a wellbore drilled in a conventional formation. The embodiments consistent with this disclosure may be utilized to forecast hydrocarbon production of a wellbore drilled in an unconventional formation. The more accurate production forecasts may enable better development planning, economic outlook, reserve estimates, and business decisions, reservoir management decisions (e.g., selection and execution of hydrocarbon recovery processes), especially for unconventional and tight rock reservoirs.

Advantageously, embodiments consistent with this disclosure may lead to more accurate characterization of reserves, which may be utilized in the trading strategy.

Advantageously, embodiments consistent with this disclosure may be utilized to optimize productivity of a producing hydrocarbon bearing formation and drive reservoir management decisions. (1) As an example, embodiments consistent with this disclosure may be utilized to optimize well designs, including orientation of wellbores, drilling mud weight, casing points, completion designs, etc. (2) As an example, embodiments consistent with this disclosure may be utilized to identify azimuth, wellbore length, landing zone (depth), geosteering to follow the landing zone, etc. For example, higher producers and their associated depths may be identified and utilized to drill a new wellbore to that identified associated depth. (3) As another example, the embodiments consistent with this disclosure may be utilized to control flow of fluids injected into or received from the formation, a wellbore, or any combination thereof. Chokes or well control devices that are positioned on the surface, downhole, or any combination thereof may be used to control the flow of fluid into and out. For example, surface facility properties, such as choke size, etc., may be identified for the high producers and that identified choke size may be utilized to control fluid into or out of a different wellbore. (4) As an example, embodiments consistent with this disclosure may be utilized in hydrocarbon exploration and hydrocarbon production to select completions, components, fluids, etc. For example, a variety of casing, tubing, packers, heaters, sand screens, gravel packs, items for fines migration, etc. may be selected for each wellbore to be drilled based on the corresponding items that are identified for the higher producers.

Embodiments disclosed herein utilize a "compositional" reservoir simulator to account for the phase behavior of fluids. In particular, compositional reservoir simulators are capable of computing movement of liquid and gas phases as a mixture of at least three components (e.g., oil, gas, water, solvent) through porous media over a series of time-steps. Typically, compositional reservoir simulators utilize equilibrium flash calculations and/or an equation of state (EOS) systems to solve for fluid phase component balance and phase equilibrium.

Cell: The term "cell" is a unit or element of a mesh or grid, for example, a reservoir simulation grid used to partition a geological model of a subterranean reservoir (or portion of a reservoir volume) into a discrete system or domain on which fluid flow equations can be solved. Cells in reservoir simulation may be of any shape (e.g., triangles, rectangles, tetrahedron), size or resolution (e.g., fine-scale, course-scale) depending on how the grid is defined (e.g., structured, unstructured), can be two- or three-dimensional, and are associated with one or more reservoir characteristics (e.g.,

permeability, porosity, fluid density, fluid viscosity). In some embodiments, a portion of cells are defined to correspond with the formation matrix, also referred to as porous media, and a portion of cells are defined to correspond with voids in the reservoir matrix (e.g., fractures or faults). In the context of cell location, the term "adjacent" refers to two neighboring cells sharing an interface.

Under a multi-scale framework, multiple grids of various resolution may be utilized (e.g., at least one course-scale grid and at least one fine-scale grid). Embodiments disclosed herein utilize a multi-scale finite volume framework, which utilizes a fine-scale grid, a primary course-scale grid, and a dual course-scale grid for discretizing the reservoir volume and solving fluid flow equations. Additional details of grids and formulations used in multi-scale finite volume frameworks can be found in United States Patent Nos. 6823297B2, 7496488B2, 7546229B2, 7765091B2, 8301429B2, 8594986B2, 8650016B2, and 8798977B2.

Conservative: The term "conservative" is defined herein as a numerical scheme that maintains or keeps the weighted summation of a physics quantity the same over the entire overlapped part of two or more model domains/meshes before and after data mapping. For example, conservation of mass or energy of reservoir flow can be enforced on a local or global scale in a simulator over a time period (i.e., neither can be added or removed).

Convergence: The terms "convergence" or "converge" or "convergence criteria" are defined herein as improving or iteratively refining a solution until it has reached an error less than a predetermined or defined threshold or the change in value or distribution of a parameter is within a tolerance. For example, a convergence tolerance for pressure ($\varepsilon_p$) might be set by the user to be 1.0 psia or 0.1 psia (1 psi = 6,89476 kPa). Similarly, a convergence tolerance for saturation ($\varepsilon_S$) might be set by the user to be $10^{-3}$ or $10^{-4}$. Generally accepted convergence criteria are well known by those skilled in the art. Once a simulator reaches convergence or the convergence criteria is is satisfied, it can move on to the next step in an algorithm or the algorithm can be terminated.

Other definitions:

The terms "comprise" (as well as forms, derivatives, or variations thereof, such as "comprising" and "comprises") and "include" (as well as forms, derivatives, or variations thereof, such as "including" and "includes") are inclusive (i.e., open-ended) and do not exclude additional elements or steps. For example, the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Accordingly, these terms are intended to not only cover the recited element(s) or step(s), but may also include other elements or steps not expressly recited. Furthermore, as used herein, the use of the terms "a" or "an" when used in conjunction with an element may mean "one," but it is also consistent with the meaning of "one or more," "at least one," and "one or more than one." Therefore, an element preceded by "a" or "an" does not, without more constraints, preclude the existence of additional identical elements.

The use of the term "about" applies to all numeric values, whether or not explicitly indicated. This term generally refers to a range of numbers that one of ordinary skill in the art would consider as a reasonable amount of deviation to the recited numeric values (i.e., having the equivalent function or result). For example, this term can be construed as including a deviation of $\pm 10$ percent of the given numeric value provided such a deviation does not alter the end function or result of the value. Therefore, a value of about 1% can be construed to be a range from 0.9% to 1.1%. Furthermore, a range may be construed to include the start and the end of the range. For example, a range of 10% to 20% (i.e., range of 10%-20%) includes 10% and also includes 20%, and includes percentages in between 10% and 20%, unless explicitly stated otherwise herein.

The term "if" may be construed to mean "when" or "upon" or "in response to determining" or "in accordance with a determination" or "in response to detecting," that a stated condition precedent is true, depending on the context. Similarly, the phrase "if it is determined [that a stated condition precedent is true]" or "if [a stated condition precedent is true]" or "when [a stated condition precedent is true]" may be construed to mean "upon determining" or "in response to determining" or "in accordance with a determination" or "upon detecting" or "in response to detecting" that the stated condition precedent is true, depending on the context.

It is understood that when combinations, subsets, groups, etc. of elements are disclosed (e.g., combinations of components in a composition, or combinations of steps in a method), that while specific reference of each of the various individual and collective combinations and permutations of these elements may not be explicitly disclosed, each is specifically contemplated and described herein. By way of example, if an item is described herein as including a component of type A, a component of type B, a component of type C, or any combination thereof, it is understood that this phrase describes all of the various individual and collective combinations and permutations of these components. For example, in some embodiments, the item described by this phrase could include only a component of type A. In some embodiments, the item described by this phrase could include only a component of type B. In some embodiments, the item described by this phrase could include only a component of type C. In some embodiments, the item described by this phrase could include a component of type A and a component of type B. In some embodiments, the item described by this phrase could include a component of type A and a component of type C. In some embodiments, the item described by this phrase could include a component of type B and a component of type C. In some embodiments, the item described by this phrase could include a component of type A, a component of type B, and a component of type C. In some embodiments, the item described by this phrase could include two or more components of type A (e.g., A1 and A2). In some embodiments, the item described by this phrase could include two or more components of type B (e.g., B1 and B2). In some embodiments, the item described by this phrase could include two or more components of type C (e.g., C1 and C2). In some embodiments, the item described by this phrase could include two or more of a first component (e.g., two or more components of type A (A1 and A2)), optionally one or more of a second component (e.g., optionally one or more components of type B), and optionally one or more of a third component (e.g., optionally one or more components of type C). In some embodiments, the item described by this phrase could include two or more of a first component (e.g., two or more components of type B (B1 and B2)), optionally one or more of a second component (e.g., optionally one or more components of type A), and optionally one or more of a third component (e.g., optionally one or more components of type C). In some embodiments, the item described by this phrase could include two or more of a first component (e.g., two or more components of type C (C1 and C2)), optionally one or more of a second component (e.g., optionally one or more components of type A), and optionally one or more of a third component (e.g., optionally one or more components of type B).

This written description uses examples to disclose the invention, including the best mode, and also to enable any person skilled in the art to make and use the invention. The patentable scope is defined by the claims, and may include other examples that occur to those skilled in the art. Such other examples are intended to be within the scope of the claims if they have elements that do not differ from the literal language of the claims, or if they include equivalent elements with insubstantial differences from the literal language of the claims.

Unless defined otherwise, all technical and scientific terms used herein have the same meanings as commonly understood by one of skill in the art to which the disclosed invention belongs.

OVERVIEW

Embodiments describe a conservative, sequential fully implicit method for compositional reservoir simulation.

Multi-phase flow in porous media comprises coupled complex processes: i.e., elliptic flow equation, hyperbolic transport equation, and highly nonlinear phase equilibrium equation. These processes contain very different mathematical characteristics that cannot be efficiently solved by one numerical method. As a result, the fully implicit method may become numerically complex and inefficient because the Jacobian includes the derivatives with respect to all the variables from different processes.

It has been demonstrated that flow (pressure) and transport (saturation) for multi-phase flow without compositional effect can be efficiently solved by a sequential, fully implicit method. The characteristics of phase equilibrium equations is, as a result, very different from that of the transport equations. Embodiments disclosed herein describe an iterative reservoir simulation method that solves flow, transport and phase equilibrium equations sequentially. The transport of hydrocarbon components is governed by the multi-phase Darcy's equation, that is used to compute the phase velocities. The hydrocarbon components in the same phase, as result, are transported with the same phase velocity. The hydrocarbon components are redistributed inside a cell via a phase equilibrium calculation. This allows for simplification of the governing equations and application of the phase equilibrium computation to compute component transfer between phases inside a cell. The algorithm makes the nonlinear iteration scheme mass conservative. A new degree of freedom, "thermodynamic flux", is utilized to ensure volume conservation. This sequential algorithm is solved iteratively until pressure, saturation, and phase composition are fully converged.

It is well-known that conventional sequential algorithms need many iterations or fail to converge if the phase equilibrium calculation involves phase transition with a large volume change. It indicates that the current governing equations may not adequately describe fluid flux due to a rapid phase transition. A new degree of freedom, "thermodynamic flux", is introduced such that these non-convergence numerical difficulties are resolved via the thermodynamic flux term.

Embodiments disclosed herein employ a simple physical observation that all the components in a phase move with the same phase velocity. Accordingly, a multi-component system can be described by one transport equation for each phase, rather than each component. If the phase velocity is computed, all the components in the phase can be calculated from the component balance for each cell. Thus, the phase velocity is a primary variable, while the component balance equations can be back-calculated from the phase velocity and phase composition. Furthermore, a combination of the transport equations yields a pressure equation. This leads to a sequential formulation, where, pressure is solved first, followed by the computation of total velocity, which is fixed during transport computation to yield the phase saturations. Phase velocity and saturation are ultimately used to determine the phase compositions. Thermodynamic equilibrium is finally imposed and a flash calculation yields the new compositions and saturations for each phase. The process is iterated until pressure, saturations and composition converge. This sequential algorithm is described in natural variables; and it represents a black oil formulation by replacing phase equilibrium calculation with solution gas formulation. This formulation allows for interpretation of the complex physical processes in porous media in a simple and natural way.

Embodiments disclosed herein examine phase behavior in a confined space (porous media) that can be suitably used in compositional simulation. The flash calculation with fixed volume and temperature (VT-flash) will be explored and be compared with a traditional flash with fixed pressure and temperature (PT-flash). An unsteady "thermodynamic flux" is introduced to capture the effect of phase equilibrium in a confined space, which provides an additional degree of freedom to resolve any inconsistency and improve numerical convergence.

**Governing Equations and Discretized Formulation**

Many variables in compositional formulation are normally categorized as primary and secondary variables. The primary variables are solved from the conservation equations and the secondary ones are readily computed from the primary variable solution. A choice of these variables has a significant impact on the convergence rate of algorithms and the structure of the Jacobian matrix that is constructed in a Newton iterative method. Since flow and transport equations of multi-phase flow are governed by the extended Darcy's law for multi-phase flow, the natural variables (e.g., pressure and saturations) form an optimal choice as primary variables for transport calculation. Molar component fractions, however, are an optimal choice as primary variables in phase equilibrium computation. The simulation community, in general, believes that the fully implicit method provides the most stable solution and consequently, a single set of primary variables are chosen both for transport and phase equilibrium computations. By examining the governing equations, however, it is apparent that the characteristics of transport and phase equilibrium equations are so different that their implicit simultaneous solution does not provide an optimal algorithm. It has been demonstrated that a sequentially coupled algorithm for pressure and saturation can be solved efficiently by an under-relaxation scheme facilitated by a trust region and hybrid upwinding methods. Moreover, the sequential, fully implicit method makes the construction of a Jacobian simple and compact.

In compositional simulation, it is commonly accepted that the phase equilibrium is attained instantaneously, solely dependent on state variables, pressure, temperature and the composition of hydrocarbon components. Furthermore, the equation of state is widely adapted to provide a consistent phase equilibrium calculation. The equations of state (EoS) are highly nonlinear, and the convergence of phase calculation is strongly dependent on the initial guess of equilibrium constants. The characteristics of EoS is very different from that of the quasi-linear multi-phase Darcy's law. As mentioned earlier, a single numerical method is likely inefficient to solve two coupled physical processes with different nonlinearity and characteristics. An efficient sequential algorithm that can be optimized for each physical process thus needs to be developed.

To develop a sequential fully implicit method for compositional simulation, an iterative method, in which all the major stages of computation (e.g. pressure, saturation, component transport, and phase equilibrium) are solved sequentially, is employed. The algorithm, as a result, enables selection of pressure and saturations (4 variables) as primary variables. All the other variables (e.g., capillary pressure, phase compositions, etc.) become secondary, since they can be computed by correlations, simple algebraic relations and component balance equations. An equation of state (e.g., Peng-Robinson EoS) is solved at the end of iteration to update the new state variables in thermodynamic equilibrium. If the solution changes among the primary variables do not lie below a specified error tolerance, the sequential algorithm is iterated until fully converged.

The governing equations for three-phase flow in a heterogeneous domain are given by

$$\frac{\partial}{\partial t}\left(\emptyset\rho_w S_w\right) = \nabla \cdot \left(\rho_w \lambda_w \cdot \left(\nabla p_w + g\rho_w \nabla H\right)\right) - q_w \tag{1}$$

$$\frac{\partial}{\partial t}\left(\emptyset\rho_o S_o\right) = \nabla \cdot \left(\rho_o \lambda_o \cdot \left(\nabla p_o + g\rho_o \nabla H\right)\right) - q_o + E_o \tag{2}$$

$$\frac{\partial}{\partial t}\left(\emptyset\rho_g S_g\right) = \nabla \cdot \left(\rho_g \lambda_g \cdot \left(\nabla p_g + g\rho_g \nabla H\right)\right) - q_g + E_g \tag{3}$$

in the domain $\Omega$, with boundary conditions on $\partial\Omega$. Here, $\lambda_\alpha = \mathbf{k}k_{r,a}/\mu_\alpha$ is the mobility of phase $\alpha$, where $\alpha = o, w, g$ (i.e., oil, water and gas). $S_\alpha$, $k_{r,\alpha}$, $\mu_\alpha$, $\rho_\alpha$ denote, respectively, the saturation, relative permeability, viscosity, and density of phase $\alpha$. The tensor $\mathbf{k}$ describes the permeability field, which is usually represented as a complex spatial multiscale function that tends to be highly discontinuous in discrete representations. Porosity is denoted by $\emptyset$, $p_\alpha$ the phase pressure, $g$ is gravitational acceleration, $H$ denotes reservoir height. In general, $\mu_\alpha$, $\rho_\alpha$, and $\emptyset$ are functions of the pressure. The relative permeabilities, $k_{r_\alpha}$, are strong functions of saturation. In the right-hand side of equations, $q_\alpha$ denotes the source/sink due to well production and injection.

Note that the governing equations include two additional terms, $E_o$ and $E_g$, that represent mass transfer between phases (oil and gas) due to phase equilibrium. The phase equilibrium is expressed as a mass exchange between two phases with specific molar composition to satisfy the phase equilibrium. The phase equilibrium is generally computed by the equation of state or correlations.

Saturations are constrained by:

$$S_w + S_o + S_g = 1 \tag{4}$$

The phase pressures are related to the reference pressure by capillary pressures:

$$p_\alpha = p_{ref} + p_{c,\alpha} \tag{5}$$

Note that capillary pressures are often measured for oil-water and oil-gas systems. If $p_w$ is chosen as the reference pressure, the following is obtained:

$$p_o = p_w + p_{c,ow} \tag{6}$$

$$p_g = p_w + p_{c,gw} = p_w + p_{c,gw} + p_{c,ow} \tag{7}$$

The phase fluxes are defined by:

$$u_\alpha = -\lambda_\alpha \cdot (\nabla p_\alpha + g\rho_\alpha \nabla H) \tag{8}$$

The mass conservation in phase equilibrium calculation entails:

$$E_o + E_g = 0 \tag{9}$$

In the compositional formulation the phase density is the mass averaged density of each phase:

$$\rho_o = \frac{\sum m_c x_c}{v_o} \tag{10}$$

$$\rho_g = \frac{\sum m_c y_c}{v_g} \tag{11}$$

Here, $x_c$ and $y_c$ denote the mole fraction of component $c$ in liquid and gas phases, respectively.

$v_o$ and $v_g$ are the molar volumes for oil and gas phases and $m_c$ is the molecular weight for component $c$. For simplicity, the phase equilibrium between oil and gas phases is described (i.e., it is assumed that the system contains no water-soluble components). In addition, $v_w$ is defined as the molar volume of water.

If the mole fractions of water, oil and gas phases are given by $M_w$, $M_o$ and $M_g$, respectively, the phase saturation can be expressed as:

$$S_w = \frac{M_w v_w}{V_t}, \, S_o = \frac{M_o v_o}{V_t}, \, S_g = \frac{M_g v_g}{V_t} \tag{12}$$

where the molar volume of the multi-phase fluid, $V_t$, is given by

$$V_t = M_o v_o + M_g v_g + M_w v_w \tag{13}$$

The discretized component balance equation for each cell can be derived as:

$$\frac{V_p\,(M_o+M_g)}{\Delta t V_t}\left(Z_c^{n+1} - Z_c^n\right) = \nabla \cdot \left(\frac{u_o}{v_o}x_c + \frac{u_g}{v_g}y_c\right) \tag{14}$$

Here, $\Delta t$ is the time-step size, superscripts $n$ and $n + 1$ denote the previous and current time levels, respectively. $V_p$ is the pore volume and $Z_c$ is the total mole fraction for component $c$.

For given pressure, temperature and total fluid composition, the EoS (e.g., Peng-Robinson EoS) yields the densities, volumes, and compositions for each phase:

$$E: \{p, T, Z_c\} \rightarrow \left\{L, x_c, y_c, \rho_o, \rho_g, v_o, v_g\right\} \tag{15}$$

where L is the mole fraction of oil phase.

The water phase pressure, $p = p_w$, is selected as a primary variable. The following semi-discrete form of the equations is obtained:

$$\frac{(\emptyset^{n+1}\rho_w^{n+1}S_w^{n+1} - \emptyset^n\rho_w^n S_w^n)}{\Delta t} = \nabla \cdot \left(\rho_w\lambda_w \cdot (\nabla p + g\rho_w\nabla H)\right)^{n+1} - q_w^{n+1} \tag{16}$$

$$\frac{(\emptyset^{n+1}\rho_o^{n+1}S_o^{n+1} - \emptyset^n\rho_o^n S_o^n)}{\Delta t} = \nabla \cdot \left(\rho_o\lambda_o \cdot (\nabla(p + p_{cow}) + g\rho_o\nabla H)\right)^{n+1} - q_o^{n+1} + E_o^{n+1} \tag{17}$$

$$\frac{(\emptyset^{n+1}\rho_g^{n+1}S_g^{n+1} - \emptyset^n\rho_g^n S_g^n)}{\Delta t} = \nabla \cdot \left(\rho_g\lambda_g \cdot (\nabla(p + p_{cgw}) + g\rho_g\nabla H)\right)^{n+1} - q_g^{n+1} + E_g^{n+1} \tag{18}$$

Multiplication of Eqs. (16) to (18) with

$$\omega_w = \frac{1}{\rho_w^{n+1}}, \ \omega_o = \frac{1}{\rho_o^{n+1}}, \ \omega_g = \frac{1}{\rho_g^{n+1}} \tag{19}$$

respectively, and summation of the resulting equations gives

$$\frac{\emptyset^{n+1}}{\Delta t} - \frac{\emptyset^n}{\Delta t}\left(\sum_{\ell \in \{w,o,g\}} \omega_\ell^{n+1}\rho_\ell^n S_\ell^n\right) = R \tag{20}$$

where the $R$ is the sum of the product of the $\omega$ factors and the right-hand-side of Eqs. (16), (17), and (18). Eq. (20) is the overall mass balance equation, in which saturations at the current time-level, $n + 1$, do not appear explicitly. To simplify the nonlinearities of parameters in Newton iteration, the coefficients in the convective terms (i.e., the $\omega$'s, mobilities, and formation volume factors on the right-hand-side of Eq. (20)) are lagged by one iteration. However, the pressure dependent coefficients in the accumulation term (e.g., $\emptyset^{n+1}$ and $\omega^{n+1}$), as well as the source/sink terms ($\omega^{n+1}q^{n+1}$) are linearized.

After rearrangement, the following equation is obtained:

$$C\frac{(p^{v+1} - p^v)}{\Delta t} - \omega_w\nabla \cdot (\lambda_w'^v \cdot \nabla p^{v+1}) - \omega_o\nabla \cdot (\lambda_o'^v \cdot \nabla p^{v+1}) - \omega_g\nabla \cdot \left(\lambda_g'^v \cdot \nabla p^{v+1}\right)$$
$$= RHS1 \tag{21}$$

with

$$C = \left.\frac{\partial \varnothing}{\partial p}\right|^{v} - \varnothing^{n}\left(\left.\frac{\partial \omega_{w}}{\partial p}\right|^{v}\rho_{w}^{n}S_{w}^{n} + \left.\frac{\partial \omega_{o}}{\partial p}\right|^{v}\rho_{o}^{n}S_{o}^{n} + \left.\frac{\partial \omega_{g}}{\partial p}\right|^{v}\rho_{g}^{n}S_{g}^{n}\right)$$

$$+ \Delta t\left(\left.\frac{\partial \omega_{w}q_{w}}{\partial p}\right|^{v} + \left.\frac{\partial \omega_{o}q_{o}}{\partial p}\right|^{v} + \left.\frac{\partial \omega_{g}q_{g}}{\partial p}\right|^{v} - \left.\frac{\partial \omega_{o}E_{o}}{\partial p}\right|^{v} - \left.\frac{\partial \omega_{g}E_{g}}{\partial p}\right|^{v}\right)$$

$$(22)$$

$$RHS1 = \frac{\varnothing^{n}}{\Delta t}\left(\omega_{w}\rho_{w}^{n}S_{w}^{n} + \omega_{o}\rho_{o}^{n}S_{o}^{n} + \omega_{g}\rho_{g}^{n}S_{g}^{n}\right) - \frac{\varnothing^{v}}{\Delta t} - \left(\omega_{w}q_{w}^{v} + \omega_{o}q_{o}^{v} + \omega_{g}q_{g}^{v}\right)$$

$$+\left(\omega_{o}E_{o}^{v} + \omega_{g}E_{g}^{v}\right) + \omega_{w}\nabla \cdot \left(g\rho_{w}\lambda_{w}^{\prime v} \cdot \nabla H\right) + \omega_{o}\nabla \cdot \left(g\rho_{o}\lambda_{o}^{\prime v} \cdot \nabla H\right)$$

$$+\omega_{g}\nabla \cdot \left(g\rho_{g}\lambda_{g}^{\prime v} \cdot \nabla H\right) + \omega_{o}\nabla \cdot \left(\lambda_{o}^{\prime v} \cdot \nabla p_{cow}\right) + \omega_{g}\nabla \cdot \left(\lambda_{g}^{\prime v} \cdot \nabla p_{cgw}\right)$$

$$(23)$$

and

$$\lambda_{o}^{\prime v} = \rho_{o}^{v}\lambda_{o}^{v}, \quad \lambda_{w}^{\prime v} = \rho_{w}^{v}\lambda_{w}^{v}, \quad \lambda_{g}^{\prime v} = \rho_{g}^{v}\lambda_{g}^{v} \qquad (24)$$

In these expressions, $v$ and $v + 1$ denote the previous and current iteration levels, respectively. Eq. (21) is solved for $p^{v+1}$, and the updated pressure is then used to derive the linearized transport equations:

$$\frac{\left(\varnothing^{v+1}\rho_{\alpha}^{v+1}S_{\alpha}^{v+1} - \varnothing^{n}\rho_{\alpha}^{n}S_{\alpha}^{n}\right)}{\Delta t} =$$

$$\nabla \cdot \left[\rho_{\alpha}^{v+1}\left(\lambda_{\alpha}^{v} + \sum_{\ell \in \{w,o,g\}}\left.\frac{\partial \lambda_{\alpha}}{\partial S_{\ell}}\right|^{v}\left(S_{\ell}^{v+1} - S_{\ell}^{v}\right)\right) \cdot \left(\nabla p^{v+1} + g\rho_{\alpha}^{v+1}\nabla H\right)\right]$$

$$-(q_{\alpha} - E_{\alpha})|_{p^{v+1}} - \sum_{\ell \in \{w,o,g\}}\left.\left(\frac{\partial q_{\alpha}}{\partial S_{\ell}} - \frac{\partial E_{\alpha}}{\partial S_{\ell}}\right)\right|_{p^{v+1}}\left(S_{\ell}^{v+1} - S_{\ell}^{v}\right)$$

$$(25)$$

where $\alpha \in \{w, o, g\}$. In common practice, only two out of the three equations, Eq. (25), are solved; and the saturation of the third phase is obtained from Eq. (4). Three saturation solutions from Eq. (25) have been found to yield better convergence by relaxing the volume constraint so that the pore volume and fluid volume are equal in the iterative process. Note that the states at $v, v + 1$, and $n + 1$ are identical when the solution is converged.

Equations (21) and (25) are solved for $p^{v+1}$, $S_{\alpha}^{v+1}$, respectively. The density, $\rho_{\alpha}^{v+1}$, is updated using the new pressure while the other secondary variables, $\{x_{c}^{v+1}\}$, $\{y_{c}^{v+1}\}$, and $\{z_{c}^{v+1}\}$ are computed from the component balance equation. Using the phase equilibrium calculation, Eq. (15), the state variables are updated:

$$E : \{p^{v+1}, T, \{z_{c}^{v+1}\}\} \rightarrow \{\rho_{\alpha}^{\bullet,v+1}, \{x_{c}^{\bullet,v+1}\}, \{y_{c}^{\bullet,v+1}\}, v_{\alpha}^{\bullet,v+1}\} \text{ where } \alpha \in \{w, o, g\}. \qquad (26)$$

The superscript • indicates a state variables in thermodynamic equilibrium. The updated variables in Eq. (26) readily yield the new saturations, $S_\alpha^{\bullet,v+1}$, that are consistent with EoS.

**Conservative Total Velocity Field**

Equation (21) is solved with the appropriate boundary condition. The resulting pressure solution is then used to compute locally conservative fine-scale velocities, which are necessary for accurate transport computations (i.e., solving the saturation equations).

$$u_T = u_w + u_o + u_g$$

$$= -\lambda_w \cdot \nabla(p + \rho_w gH) - \lambda_o \cdot \nabla(p + p_{cow} + \rho_o gH) - \lambda_g \cdot \nabla(p + p_{cgw} + \rho_g gH)$$

$$(27)$$

Note that the total velocity ($u_T$) is defined as the sum of phase velocities. Since the pressure and saturation of incompressible flow are decoupled with fixed total velocity, a numerical scheme for incompressible flow is needed that sequentially couples pressure and saturations with fixed total velocity. In embodiments herein, the total velocity with fractional flow formulation will be extended to compositional simulation.

**Saturation Solution**

Using the conservative velocity field, Eq. (25) can be written as

$$\frac{(\emptyset^{v+1}\rho_\alpha^{v+1}S_\alpha^{v+1} - \emptyset^n\rho_\alpha^n S_\alpha^n)}{\Delta t} = \rho_\alpha^{v+1}\nabla \cdot \left( u_\alpha^{v+1}\left( 1 + \frac{1}{\lambda_\alpha^v}\sum_\ell \frac{\partial\lambda_\alpha}{\partial S_\ell}\Big|^v (S_\ell^{v+1} - S_\ell^v) \right) \right)$$

$$- \left( (q_\alpha - E_\alpha)|_{p^{v+1},S^v} - \sum_\ell \left( \frac{\partial q_\alpha}{\partial S_\ell} - \frac{\partial E_\alpha}{\partial S_\ell} \right)\Big|_{p^{v+1},S^v} (S_\ell^{v+1} - S_\ell^v) \right)$$

$$(28)$$

The phase velocity in the right-hand side of Eq. (28) can be further expressed in terms of the total velocity and gravitational and capillary velocities:

$$u_\alpha^{v+1} = \frac{\lambda_\alpha}{\lambda_T}\left( u_T^{v+1} - \sum_\beta \lambda_\beta \left( \rho_\beta g - \rho_\alpha g \right)\nabla H - \sum_\beta \lambda_\beta \left( \nabla p_{c\beta w} - \nabla p_{c\alpha w} \right) \right) \quad (29)$$

where $\lambda_T = \Sigma \lambda_l$ and $p_{c\beta w} = 0$ for $\beta = w$. With total velocity fixed, Eqs. (28) and (29) are solved for saturations at the new iteration level, $S_\alpha^{v+1}$.

**Fractional Flow Equations**

The phase velocity in Eq. (29) can be rewritten in a concise form:

$$u_\alpha = f_\alpha^U(S)u_T + \sum_\beta f_{\alpha,\beta}^G(S)C_{\alpha,\beta}^G + \sum_\beta f_{\alpha,\beta}^C(S)C_{\alpha,\beta}^C \qquad (30)$$

The fractional-flow functions are derived as:

$$f_\alpha^U = \frac{\tilde{m}_\alpha k_{r\alpha}}{\sum_\ell \tilde{m}_\ell k_{r\ell}} \tag{31}$$

$$f_{\alpha,\beta}^G = f_{\alpha,\beta}^C = \frac{\tilde{m}_\alpha \tilde{m}_\beta k_{r\alpha} k_{r\beta}}{\sum_\ell \tilde{m}_\ell k_{r\ell}} \tag{32}$$

Here, $\tilde{m}_\alpha$ $(= \mu_w/\mu_\alpha)$ is the inverse viscosity ratio with respect to the viscosity of water phase. Note that $\sum_\alpha f_\alpha^U = 1$. The velocities due to buoyancy and capillary forces are characterized by the following dimensionless gravity and capillary numbers, respectively:

$$C_{\alpha,\beta}^G = \frac{kg(\rho_\beta - \rho_\alpha)}{\mu_w u_c} \nabla H \tag{33}$$

$$C_{\alpha,\beta}^C = \frac{k\left(\nabla p_c^\beta - \nabla p_c^\alpha\right)}{\mu_w u_c} \tag{34}$$

where $u_c$ is a characteristic velocity. Note that the velocities $u_T$ and $u_\alpha$ in Eq. (30) are normalized with respect to $u_c$. All quantities listed from here on, are normalized with respect to characteristic variables, $l_c$, $u_c$, $t_c(=l_c/u_c)$, and $p_c$ $(=u_c l_c \mu_w/k)$, as well.

In a discretized model, a one-point upwind scheme based on the phase velocity is commonly applied for fractional flow. Many numerical instabilities are caused by the flip-flopping of phase upwind direction, so embodiments of the present invention utilize a hybrid upwinding method that greatly enhances numerical stability of multi-phase flow in the presence of gravity and capillary forces. Various hybrid upwind schemes known in the art can be utilized. From Eqs. (30) - (34) it is apparent that the flux functions from gravity and capillary forces have a similar functional form: in the former the driving force is the difference of phase densities, while in the latter that of capillary pressure gradients. Note that the fractional flows, $f_{\alpha,\beta}^G$ and $f_{\alpha,\beta}^C$ are identical in Eq. (32).

**Component Balance Equation**

In embodiments disclosed herein, phase mixing (component transfer between phases) is not involved in the solution of the saturation equations. This approximation makes the algorithm simple, allowing the separation of each process into a dedicated sequential stage. The component balance equation, as result, can be straightforwardly solved for given component compositions in a cell and phase velocities between cells. Note that all the components in a phase moves between two neighboring cells with the same phase velocity. The mass fraction of components are solved from the component transport equation and converted into the mole fraction of components. The mass fraction of component c of phase α in cell i, can be computed from the mole fraction:

$$\xi_{c,i}^\alpha = \frac{x_{c,i}^\alpha m_c}{\sum_\ell x_{\ell,i}^\alpha m_\ell}. \tag{35A}$$

where $x_{c,i}^\alpha$ and

$$\xi_{c,i}^\alpha$$

denote the mole fraction and mass fraction of component c in phase α of cell i, respectively, and $m_c$ is the molecular weight of component c. The component balance equation for component c in cell i can be written as:

$$\frac{1}{\Delta t}(V_{\alpha,i}^{n+1} \rho_{\alpha,i}^{n+1} \xi_{c,i}^{\alpha,n+1} - V_{\alpha,i}^n \rho_{\alpha,i}^n \xi_{c,i}^{\alpha,n}) = \sum_{j \in \aleph_i} \rho_{\alpha,ij}^{n+1} u_{\alpha,ij}^{n+1} \xi_{c,ij}^{\alpha,n+1} \tag{35B}$$

where $j \in \aleph_i$ denotes the neighboring cells connected to cell $i$, the subscript $ij$ indicates the properties at the cell interface of $i$ and $j$. $V_{\alpha,i}$ is the $\alpha$-phase volume of cell $i$. Similar to the conventional upwinding method, the molar fraction of component $c$ at the cell interface is determined by the phase velocity at the interface:

$$x_{c,ij}^{\alpha,n+1} = x_{c,i}^{\alpha,n+1}, \text{ if } u_{\alpha,ij}^{n+1} \geq 0,$$
$$= x_{c,j}^{\alpha,n+1}, \text{ if } u_{\alpha,ij}^{n+1} < 0 \qquad (36A)$$

The phase density $p_{\alpha,ij}^{n+1}$ at the cell interface can be similarly specified as a one-point upwind value. Note that for given phase velocities between cells, the linear system of equations, Eq. (35B), can be directly solved. The mass fraction can be converted to the mole fraction:

$$x_{c,i}^{\alpha} = \frac{\xi_{c,i}^{\alpha}/m_c}{\sum_{\ell} \xi_{\ell,i}^{\alpha}/m_\ell}. \qquad (36B)$$

## Phase Equilibrium Calculation

The phase equilibrium calculation of hydrocarbons is highly non-linear and entails special algorithms to ensure numerical convergence. In embodiments, the equation of state is a cubic equation with two parameters that can only converge with good initial estimate of equilibrium factors. As a reservoir simulation run includes many phase equilibrium computations, it is crucial to optimize the algorithm to be numerically efficient and robust. In practical reservoir simulation the Peng-Robinson Equation of State (PREoS) is typically used. In embodiments disclosed herein, PREoS is also employed for phase equilibrium calculation. However, one skilled in the art will appreciate other types of EoS can be utilized, such as the Soave-Redlich-Kwong EoS.

In compositional simulation, a phase equilibrium is often assumed to be attained instantaneously in a grid of finite volume for given pressure and temperature (PT-flash). This commonly accepted assumption is not rigorous or accurate due to incomplete mixing in a heterogeneous grid block and the large scale of grids. There have been several studies to address this non-equilibrium phase behavior. It is apparent that phase equilibrium in porous media cannot be simply described by a simple fugacity equality with given pressure and temperature. It, as a result, involves ambiguity and complexity due to the non-equilibrium thermodynamics, diffusion process between phases, pore volume constraint, scale difference in pores and simulation grids, etc. Especially, if the pores are small (e.g., nano pores), other physical phenomena play an important role in thermodynamics equilibrium.

The equilibrium condition of PT-flash is not suited for fluid in porous media because of a strong pore volume constraint, which may be violated if the phase equilibrium calculation induces a large fluid volume change. It is thus important to explore different flash calculations based on state functions. For instance, the phase equilibrium computation with specified volume and temperature (VT-flash) may provide a more relevant condition in porous media. The flash calculation algorithm for PT and VT flashes are provided below. Embodiments of the present invention utilize a modified PT-flash with volume constraint, by adjusting fluid densities. This is a simpler computation than the VT-flash and it also conserves the volume in phase transition. As the phase equilibrium is a volumetric averaged variable with large uncertainties and complexity, the third option can be a practical alternative that is simple to compute and also provides the conservation of mass and volume.

The modified version of PT-flash is designed that the gas volume can be compressed to conserve the total fluid volume. As previously discussed, sudden volume changes in phase transition create numerical difficulties in compositional simulation. In a constant composition expansion, the liquid volume monotonically increases as pressure decreases, but the total fluid volume increases quickly as the gas comes out as the pressure is lower than the bubble point. Even though the mass in the gas phase is small, the gas volume is so disproportionally large that the sum of saturations becomes greater than one. This cannot be modeled easily by the current multiphase Darcy's equation. Either an infinitesimally small time-step size with which the multi-phase Darcy's equation is asymptotically still valid can be employed, or an intermediate stage is required to conserve mass/volume. Embodiments disclosed herein utilize a simple modification of phase equilibrium that allows a transient gas phase to honor total volume and mass of hydrocarbons. The phase split is still based on PT-flash.

Embodiment also utilize a new degree of freedom, "thermodynamic flux", that allows an additional fluid flux to achieve the volume constraint. In porous media, fluid is unable to achieve a phase equilibrium instantaneously at given pressure and temperature. A relaxation time is needed so the extra volume (positive or negative) can dissipate through the neighboring cells. This extra flux is physically induced by the volume change from phase equilibrium.

**PT-Flash**

There are two major algorithms to solve the equation of state: (1) Direct successive substitution and (2) Newton's method for linearized equations. A mixed strategy of successive substitution and Newton's method is also known to expedite computation.

Successive Substitution

The initial guess of the equilibrium constant for component *c* is generally provided by Wilson's equation: ln

$$K_c^0 = \ln \frac{p_C^c}{p} + 5.373(1 + \omega^c)\left(1 - \frac{T_C^c}{T}\right) \tag{37}$$

Here, $T_C^c$, $p_C^c$, and $\omega^c$ are the critical temperature, critical pressure, and acentric factor for component *c*, respectively. From the initial guess of the equilibrium constants the fugacity can be computed. The equilibrium constant is iteratively updated to convergence:

$$K_c^{v+1} = \frac{f_c^{o,v}(p,T,\{x_i\})}{f_c^{g,v}(p,T,\{y_i\})} \tag{38}$$

Newton Method

The set of equations to solve for phase equilibrium is

$$f_c(K) = \left(\ln\left(v_c/M_g\right) + \ln\emptyset_c^V\right) - \left(\ln(l_c/M_o) + \ln\emptyset_c^L\right) \tag{39}$$

where $v_c$ and $l_c$ are the number of moles of component c in the vapor and liquid phase for one mole of the gas and liquid mixture, respectively. $M_g$ and $M_o$ denote the mole fractions of gas and liquid phases, and $\emptyset_c^V$ and $\emptyset_c^L$ are the fugacity coefficients for component c in gas and liquid phases. Eq. (39) can be iteratively solved by a Newton-Raphson method.

**VT-Flash**

Nested Minimization

The VT-flash can be straightforwardly implemented by applying a nested minimization method with an inner loop of PT-flash. The outer loop will find pressure to satisfy constant volume. As PT-flash is well established, this nested method is very easily implemented and robust; however, it may not be computationally efficient.

Newton Method

An efficient computation of phase equilibrium can be obtained by a Newton-Raphson method.

$$\begin{pmatrix} M_{ij} & g_p \\ g_P^T & E_{pp} \end{pmatrix} + \begin{pmatrix} \Delta V \\ \Delta \ln p \end{pmatrix} + \begin{pmatrix} g \\ r_p \end{pmatrix} = 0 \tag{40}$$

where

$$g_i = \ln y_i + \ln \emptyset_i(y,T,p) - \ln x_i - \ln \emptyset_i(x,T,p) \tag{41}$$

$$M_{ij} = \frac{\partial g_i}{\partial v_j} \tag{42}$$

$$g_{p,i} = p \left( \frac{\partial \ln \phi_i(y,T,p)}{\partial p} - \frac{\partial \ln \phi_i(x,T,p)}{\partial p} \right), \text{ for } i = 1, N_c \tag{43}$$

and

$$E_{pp} = \frac{p^2}{RT} \frac{\partial V}{\partial p} \tag{44}$$

**Modified PT-Flash**

Considering the ambiguity and uncertainty associated with phase equilibrium in porous media, a modified PT phase equilibrium is utilized in embodiments herein. The modified PT-Flash honors volume and mass conservation, by modifying the fluid density computation to conserve volume. The main advantage of this modified phase equilibrium reduces numerical instability due to the sudden increase of the total volume in phase transition.

From the constant composition expansion, the liquid density does not change much as pressure decreases, but the gas density is much more sensitive to pressure change. Furthermore, the first small amount of gas coming out from the fluid is likely entrapped in pores by the capillary pressure. It is thus a reasonable assumption that the gas may have a different pressure from liquid pressure. As a result, if the volumes and densities of gas and liquid are given by PT-flash as $V_g$, $V_l$, $\rho_l$, and $\rho_g$, respectively, meta-stable gas and density can be employed:

$$V_g^* = V_0 - V_l \tag{45}$$

$$\rho_g^* = \rho_g \frac{V_g}{V_g^*} \tag{46}$$

Here, $V_0$ is the total hydrocarbon volume before the flash calculation. For the case of no-gas phase (near a dew point) after the flash calculation, the liquid density can be adjusted to satisfy the volume constraint:

$$V_l^* = V_0 \tag{47}$$

$$\rho_l^* = \rho_l \frac{V_l}{V_l^*} \tag{48}$$

**Thermodynamic Flux**

The VT-flash entails an additional degree of freedom, thermodynamic pressure, $p^{thm}$, to satisfy the volume constraint, whereas in PT-flash the dynamic pressure, $p^{dyn}$, from the transport equation is used in phase equilibrium computation, without strictly honoring the volume constraint. If the total volume does not change much in phase equilibrium calculation, $p^{thm} \sim p^{dyn}$. In phase transition, these two pressures can be substantially different. The conventional governing equations may not accurately describe these transient phenomena. Accordingly, it is important to understand the actual physical path that a fluid may follow in reaching a phase equilibrium in porous media.

If VT-flash is applied, the transport equation becomes easy to solve without volume balance error, but the noticeable discrepancy between thermodynamic and dynamic remains. An additional model is needed to describe the flux due to the non-equilibrium pressure (= $p^{thm}$ - $p^{dyn}$). Embodiments herein account for this by utilizing a thermodynamic flux between two adjacent cells $i$ and $j$, which is considered proportional to the difference of non-equilibrium pressures:

$$q_{ij}^{thm} = T_{ij} \left( p_i^{thm} - p_i^{dyn} - p_j^{thm} + p_j^{dyn} \right) \tag{49}$$

This additional flux will reduce the difference of the two pressures to reach a true phase equilibrium. Nonetheless, solving

17

Eq. (49) can be expensive as it may require a global solution.

In embodiments, instead of solving Eq. (49) rigorously, a simple approximation is utilized to estimate the thermodynamic flux by computing the difference between fluid volume and pore volume. A high fluid volume increase accompanied in phase transition from liquid phase to two-phase of liquid and gas, the extra fluid volume is allowed to move out of the cell to the downstream cell (or to the production well). In the case of fluid volume shrinkage, often encountered in miscible flooding, the neighboring fluid enters the cell to fill the void created by the phase transition. With this mechanism in place, the sequential algorithm is iterated to achieve numerical convergence.

## Sequential Fully Implicit Scheme

Since the transport multi-phase flow equation and phase equilibrium equations are derived for distinctly different processes, it is desirable to develop a sequential algorithm that employs modular programming design and provides natural interpretation of physical process.

A direct sequential IMPES method an implicit sequential method to improve numerical convergence and stability over the IMPES method have previously been developed. Nevertheless, the numerical stability is a daunting challenge for the complex multi-component fluid flow with nonlinear phase equilibrium computation, and, as a result, the industry mostly adapts the fully implicit method in commercial compositional simulators.

Recently stable and convergent sequential fully implicit schemes have been investigated. For example, a compositional multi-scale formulation based on overall composition, in which the phase equilibrium calculation was not included, has been proposed. Others have employed the pressure equation based on total mass and divided domain for fully implicit (FIM) and sequential fully implicit (SFI) formulations. For many cases, if the FIM domain becomes substantial, the cost of the algorithm increases significantly. In another example, a two-step sequential method for compositional simulation has been proposed: (1) construct and solve the pressure equation and (2) solve the coupled species transport equation for phase saturations and compositions. Numerical convergence is improved by relaxing the volume balance with introducing the overall mass density as a degree-of-freedom. Highly localized errors near the gas and oil contact area were identified.

Developers of SFI algorithms for compositional simulation noted that it was not possible to derive an algorithm that exactly satisfies the governing equations and constraints. Some inconsistencies are tolerated to provide a convergent solution with an acceptable error tolerance. This might indicate that the pressure, saturation, and phase behavior are strongly coupled and, as a result, the sequential algorithm may not model correctly the strongly coupled terms. It was noted that the numerical inconsistencies are localized around a domain where a large volume change occurs due to phase transition. This observation, however, may also indicate that the governing equation may not accurately describe the process in which the total fluid volume is significantly different from the pore volume. It may violate the fundamental assumption of the Darcy's equation for multi-phase flow. Simulators often adapt the rescaling of variables or chopping variables that lie outside of the physical boundary. The mathematical implication of rescaling or chopping variables in this highly nonlinear problem is not fully investigated. It is quite possible that the fully implicit algorithm may allow a solution that is not consistent or convergent.

## Reordering Saturation Equations

It is well-known that the convergence of hyperbolic saturation equation can be improved significantly if the variables are reordered, based on their potential values or upwind directions. Embodiments herein construct a permutation matrix, $P$, that reorders cells from natural order to upwind-direction based order. The linearized saturation equation Eq. (28) is first expressed in a compact matrix form:

$$AS = R \qquad (50)$$

where $S$ is the saturation vector $\left[S_w^{v+1}, S_o^{v+1}, S_g^{v+1}\right]^T$ and $R$ is the right-hand-side vector. Applying the permutation matrix $P$, Eq. (50) is reordered as

$$\tilde{A}\tilde{S} = \tilde{R} \qquad (51)$$

where

$$\tilde{A} = PAP^T, \ \tilde{S} = PS, \ and \ \tilde{R} = PR$$

Note that the permutation matrix is orthogonal ($PP^T = I$). When the fluid properties in upwind change substantially in phase equilibrium calculation, the reordering scheme can be employed to improve numerical convergence. The phase equilibrium operator $E$ will yield

$$\{S_{oj}^{\bullet,v},\ S_{g,j}^{\bullet,v},\ x_j^{\bullet,v},\ y_j^{\bullet,v},\ \rho_{o,j}^{\bullet,v},\ \rho_{g,j}^{\bullet,v},\ \mu_{o,j}^{\bullet,v},\ \mu_{g,j}^{\bullet,v}\} = E\big(\{S_{oj}^{v},\ S_{g,j}^{v},\ x_j^{v},\ y_j^{v},\ \rho_{o,j}^{v},\ \rho_{g,j}^{v},\ \mu_{o,j}^{v},\ \mu_{g,j}^{v}\}\big)$$

$$(52)$$

In the reordered saturation equation, Eq. (51), cell saturation and phase equilibrium are sequentially combined for each cell. They are evaluated in a cell-by-cell basis. This re-ordered scheme will improve the saturation convergence, especially when phase equilibrium significantly alters the cell properties (e.g., saturation, phase density, viscosity, etc.).

**Mathematical Structure**

The phase equilibrium calculation is very nonlinear and numerical convergence is assured only if the initial estimate is close to the final solution. Furthermore, the multi-phase flow is assumed to be instantaneously in phase equilibrium, even though there are numerical and physical evidences that the phase equilibrium may entail a relaxation time to reach an equilibrium and the complete mixing in a grid block is not assured. In comparison, the multiphase Darcy's equation is essentially linear with strong nonlinear physical parameters (e.g., relative permeability and capillary pressure). Furthermore, the equation of state (EoS) is described by mass (molar) balance, but Darcy's law is based on volume balance with pore volume constraint. It is thus instructive to examine mathematical structure of the coupled equations of two distinctly different physical systems.

In the mathematical structure of sequential compositional reservoir simulation, the pressure equation is parabolic and transport equation is hyperbolic. To account for this, others have framed the phase equilibrium computation as a constraint minimization problem (Gibbs free energy). The partial molar derivatives of fluid compressibility are employed in the analysis. It was noted the phase equilibrium cannot be strictly satisfied in a sequential algorithm. The phase equilibrium calculation provides the molar distribution among phases and the phase densities. The saturations, computed from the phase densities, do not satisfy the volume constraint. This can cause a severe numerical stability issue in compositional simulation because the Darcy's equation requires that the volume constraint ($\Sigma\, S_\alpha = 1$) is satisfied. It is quite possible that for a given time-step size, there may not exist a feasible solution that strictly satisfies Darcy's transport equation and phase equilibrium equation. Even fully implicit schemes often encounter numerical instability, especially in phase transition. To circumvent this numerical difficulty, a different phase equilibrium calculation can be adapted (e.g., constant volume and temperature flash). This new phase equilibrium includes thermodynamic pressure that is different from dynamic pressure in the transport equation. Embodiments herein introduce a new degree of freedom, "thermodynamic flux" to strictly honor the volume constraint and equalize thermodynamic and dynamic pressures.

If the phase equilibrium only redistributes the molecular components among phases, an efficient, stable sequential algorithm can be easily designed. Note that all the molecular components in a phase move with the same phase velocity. As a result, a transport equation for each component is not needed. The conventional natural variable description is followed for transport and pressure and saturations are solved sequentially. Since molecular components are secondary variables, the phase composition can be subsequently updated. With the updated composition, a phase equilibrium calculation is applied to compute new saturation and composition. If the volume constraint is not violated in phase equilibrium computation, this sequential algorithm will converge efficiently.

---

Algorithm 1 Sequential Fully Implicit Compositional Simulation Method

---

1: The initial conditions: $T, \{p_i^o\}, \{S_i^o\}$ and physical rock and fluid properties

2: Specify well operation conditions $(q_j)$

3: $t = 0$

4: **while** $t < t_{end}$ **do**

5:     $v = 1$

6:     $p^v = p^0$, $S^v = S^0$

7:     **while** $(max(|\delta p|, |\delta s|) > \epsilon$ and $v < v^{max})$ **do**

8:         $v_p = 1$

9:         $p^{v_p} = p^v$

10:         **while** $(|\delta p| > \epsilon_p$ and $v_p < v_p^{max})$ **do**

11:             Linearize and solve pressure equation (21) for $p^{v_p+1}$

12:             $v^p \leftarrow v^p + 1$

13:         **end while**

14:         $p^{v+1} = p^{v_p}$

15:         $v_s = 1$

16:         **while** $(|\delta s| > \epsilon_s$ and $v_s < v_s^{max})$ **do**

17:             Linearize and solve the saturation equation (28) for $S^{v_s+1}$

18:             $v_s \leftarrow v_s + 1$

19:         **end while**

20:         $S^v = S^{v_s+1}$

21:         Solve component balance equation (35B) obtaining $x_c^{v_s}$, $y_c^{v_s}$, $z_c^{v_s}$

22:         Solve phase equilibrium equation (3), separately in each cell, to obtain $x_c^{\bullet,v_s}$, $y_c^{\bullet,v_s}$, $z_c^{\bullet,v_s}$

23:         Determine saturations from phase equilibrium, $S^{\bullet,v_s}$

24:         Calculate thermodynamic fluxes and update $S^{v_s}$

25:         $S^{v_s+1} = S^{\bullet,v_s}$

26:         $v \leftarrow v + 1$

27:     **end while**

28:     $t \leftarrow t + \delta t$

29: **end while**

---

Algorithm 2 Potential Reordering for the Saturation and Phase Equilibrium Coupling

---

1: Compute permutation matrix $P$, which reorders the equations based on upwind directions [16].

2: $v_s = 1$

3: **while** ($|\delta s^{v_s}| > \epsilon_s$ and $v_s < v_s^{max}$) **do**

4:  Linearize and solve the permuted saturation equation (51) for $S^{v_s}$

5:  Solve component balance equation (35B) for $x_c^{v_s}, y_c^{v_s}, z_c^{v_s}$

6:  Solve phase equilibrium equation (3), in each cell separately, to obtain $x_c^{\bullet,v_s}, y_c^{\bullet,v_s}, z_c^{\bullet,v_s}$

7:  Determine saturations from phase equilibrium, $S^{\bullet,v_s}$

8:  $S^{v_s} \leftarrow S^{\bullet,v_s}$

9:  $v_s \leftarrow v_s + 1$

10: **end while**

## Algorithm Summary

A sequential algorithm for pressure, saturation, and phase equilibrium calculations is summarized in Algorithm 1. All the elements of computation are computed sequentially:

(1) Non-linear pressure equation, Eq. (21), is solved iteratively.
(2) Nonlinear saturation equation, Eq. (28), is solved iteratively.
(3) Linear component balance equation, Eq. (35B), is solved.
(4) Phase equilibrium is computed for each cell, as described in Section 3.
(5) Iterate the outer loop to convergence.

In Algorithm 1, all the four major parts of reservoir simulation, are computed sequentially. In a practical reservoir model, phase equilibrium calculation is limited to two-phase region and phase transition cells. These cells can be easily identified because the pressure field is changing smoothly from the injection well to the production well. An efficient compositional reservoir simulator employs robust heuristic rules to skip phase equilibrium computation for most part of a reservoir model and attains a high numerical efficiency.

In a model with phase transition around well, Algorithm 1 is found to be dispersive because the saturation equation moves the fluid before phase equilibrium computation. If the phase in upwind direction change due to the phase equilibrium computation, the downstream computation, based on wrong upwind condition, naturally contain large dispersive errors in phase and components balance.

By replacing lines 16 to 24 in Algorithm 1, a new SFI scheme is designed (i.e., Algorithm 2) to eliminate these numerical errors. It employs a potential reordering scheme in saturation equation that makes use of the hyperbolic nature of saturation equation, i.e., the saturation in cell is only dependent on the cell properties in upwind direction. This algorithm is serial in nature, that can be expensive in modem computer architecture that utilizes memory access efficiency and parallel/vectorized computation. Algorithm 2 can be adaptively applied only for the cells in phase transition and the first iteration in the time-step. This will minimize the computational cost.

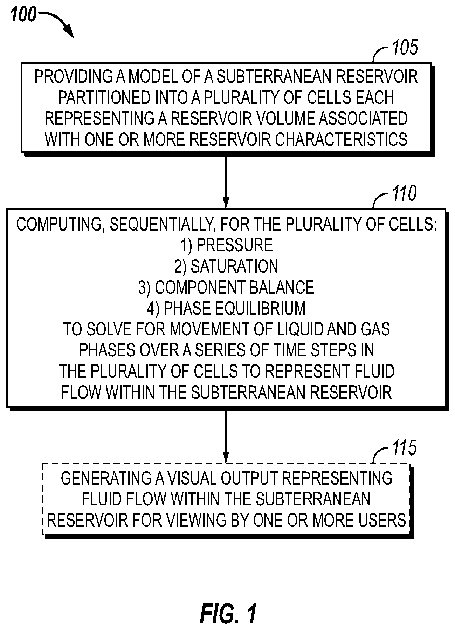

Figure 1 illustrates a conservative, sequential fully implicit compositional reservoir simulation method **100**. In step **105,** a model of a subterranean reservoir is provided that is partitioned into a plurality of cells each representing a reservoir volume associated with one or more reservoir characteristics. In step **110,** 1) pressure, 2) saturation, 3) component balance, and 4) phase equilibrium are computed sequentially to solve for movement of liquid and gas phases over a series of time-steps to represent fluid flow within the subterranean reservoir. While not shown in Figure 1, the computation in step **110** continues until convergence is reached. All molecular components in each of the liquid and gas phases are fixed to move with an equivalent phase velocity. Thermodynamic fluxes are accounted for when computing phase equilibrium by computing a difference between fluid volume and pore volume. A hybrid upwinding scheme can be employed to reorder cells based on upwind direction to improve the saturation convergence, especially when phase equilibrium significantly alters the cell properties (e.g., saturation, phase density, viscosity, etc.). The conservative, sequential fully implicit compositional reservoir simulation embodiments can be implemented in a multiscale finite volume formulation as it lends itself to modular programming design and provides natural physical interpretation.

Optionally, in step **115,** a visual output representing fluid flow within the subterranean reservoir is generated for viewing by one or more users.

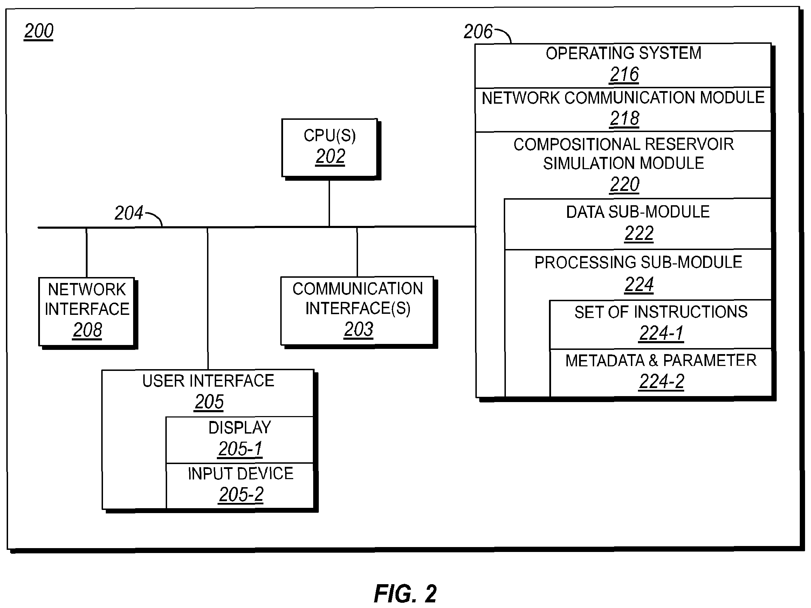

Figure 2 is a block diagram illustrating a compositional reservoir simulation system 200, in accordance with some embodiments. While certain specific features are illustrated, those skilled in the art will appreciate from the present disclosure that various other features have not been illustrated for the sake of brevity and so as not to obscure more pertinent aspects of the embodiments disclosed herein.

To that end, compositional reservoir simulation system 200 includes one or more processing units (CPUs) 202, one or more network interfaces 208 and/or other communications interfaces 203, memory 206, and one or more communication buses 204 for interconnecting these and various other components. For example, compositional reservoir simulation system 200 includes at least one processing units (CPUs) 202 communicatively connected to at least one memory 206 via a communication bus 204. The processing units 202 may be any of a variety of types of programmable circuits capable of executing computer-readable instructions to perform various tasks, such as mathematical and communication (e.g., input/output) tasks. Processing units 202 can contain multiple CPUs (e.g., 2, 4, 6) each containing a single or multiple cores (e.g., 2, 4, 8, 10, 12, 16, 32, 64, etc.). The computing system compositional reservoir simulation system 200 may comprise a computer, a phone, a tablet, a laptop, a wireless device, a wired device, a plurality of networked devices, etc. In some embodiments, the compositional reservoir simulation system 200 represents at least one computer. In some embodiments, the compositional reservoir simulation system 200 represents one computing node in a network cluster or in a cloud computing system.

The compositional reservoir simulation system 200 also includes a user interface 205 (e.g., a display 205-1 and an input device 205-2). The communication buses 204 may include circuitry (sometimes called a chipset) that interconnects and controls communications between system components. Memory 206 includes high-speed random-access memory, such as DRAM, SRAM, DDR RAM or other random-access solid-state memory devices; and may include non-volatile memory, such as one or more magnetic disk storage devices, optical disk storage devices, flash memory devices, or other non-volatile solid-state storage devices. Memory 206 may optionally include one or more storage devices remotely located from the CPUs 202. Memory 206, including the non-volatile and volatile memory devices within memory 206, comprises a non-transitory computer readable storage medium and may store reservoir simulation models and/or subterranean reservoir information or properties (e.g., saturation, phase density, viscosity, etc.).

In some embodiments, memory 206 or the non-transitory computer readable storage medium of memory 206 stores the following programs, modules and data structures, or a subset thereof including an operating system 216, a network communication module 218, and a compositional reservoir simulation module 220.

The operating system 216 includes procedures for handling various basic system services and for performing hardware dependent tasks.

The network communication module 218 facilitates communication with other devices via the communication network interfaces 208 (wired or wireless) and one or more communication networks, such as the Internet, other wide area networks, local area networks, metropolitan area networks, and so on.

In some embodiments, the compositional reservoir simulation module 220 executes the operations of method 100. Compositional reservoir simulation module 220 may include data sub-module 222, which handles a reservoir model dataset, and processing sub-module 224, which contains a set of instructions 224-1 and accepts metadata and parameters 224-2 that will enable it to execute operation of method 100. For example, reservoir model dataset can be supplied by data sub-module 222 to processing sub-module 224. Although specific operations have been identified for the sub-modules discussed herein, this is not meant to be limiting. Each sub-module may be configured to execute operations identified as being a part of other sub-modules, and may contain other instructions, metadata, and parameters that allow it to execute other operations of use in processing compositional reservoir simulation data such as sequentially computing 1) pressure, 2) saturation, 3) component balance, and 4) phase equilibrium to solve for movement of liquid and gas phases over a series of time-steps to represent fluid flow within the subterranean reservoir.

Any of the sub-modules may optionally be able to generate a display that would be sent to and shown on the user interface display 205-1. In addition, any of the reservoir model data or processed compositional reservoir simulation data products may be transmitted via the communication interface(s) 203 or the network interface 208 and may be stored in memory 206.

Method 100 is, optionally, governed by instructions that are stored in computer memory or a non-transitory computer readable storage medium (e.g., memory 206 in Figure 2) and are executed by one or more processors (e.g., processors 202) of one or more computer systems. The computer readable storage medium may include a magnetic or optical disk storage device, solid state storage devices such as flash memory, or other non-volatile memory device or devices. The computer readable instructions stored on the computer readable storage medium may include one or more of: source code, assembly language code, object code, or another instruction format that is interpreted by one or more processors. In various embodiments, some operations in each method may be combined and/or the order of some operations may be changed from the order shown in the figures. For ease of explanation, method 100 is described as being performed by a computer system, although in some embodiments, various operations of method 100 are distributed across separate computer systems.

**Examples**

The convergence and accuracy of the above-described sequential algorithm are numerically demonstrated below. To make examples numerically challenging, models with large volume changes in phase equilibrium are chosen.

*Example 1 - A one-cell model with primary depletion*

In the first example, the primary depletion of a three-component hydrocarbon system that involves a large volume increase as the fluid pressure goes below the bubble point is analyzed with a one cell model with one production well. Even though the model is very simple, it includes a fast phase transition that can be numerically challenging for compositional simulation. The initial cell fluid is composed of three hydrocarbon components and water. The initial saturations are given by $S_w = 0.1$; $S_o = 0.9$ and $S_g = 0$ at T =176 °F and $p$ = 1000 psia. The oil molar compositions are $C_1H_4 = 0.2$, $C_3H_8 = 0.3$ and $nC_{10}H_{22} = 0.5$. The model dimension is 10m $\times$ 10m $\times$ 1m in physical space. The cell porosity is 0.2 and a constant day time-step is employed.

*Constant Composition Expansion*

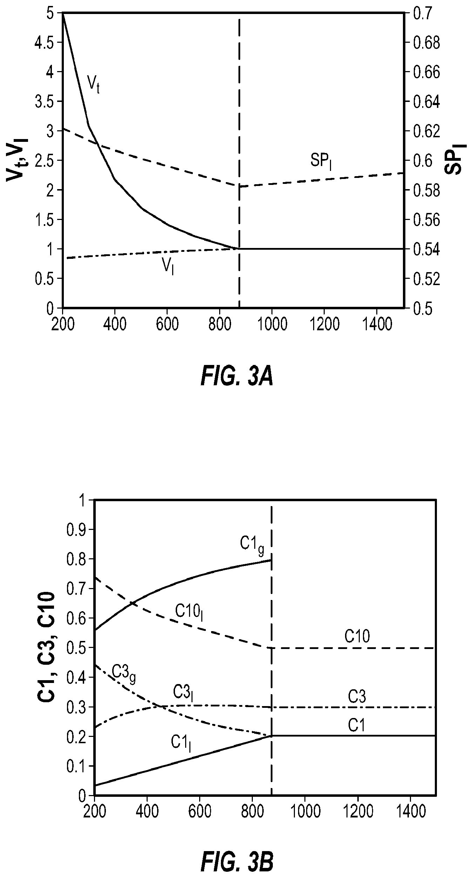

As the pressure of the cell decreases very quickly during primary depletion the phase behavior in constant composition expansion can be examined. The phase equilibrium state of gas and oil volumes and component compositions are plotted in Fig. 3A & 3B. Above the bubble point pressure, 874.9 psia, the fluid is of single phase and the liquid has a small, positive compressibility. However, the fluid goes through a drastic total volume increase as gas evolves from the fluid below the bubble point pressure. The heavy component, $nC_{10}H_{22}$, does not vaporize into gas phase, and gas phase is mostly composed of lighter components, methane and propane. Note that the liquid volume becomes smaller as pressure decreases, but the specific gravity increases, because the lighter components move from the liquid phase to the gas phase. This indicates that the complex phase behavior around the bubble point may very well be the reason that many numerical methods experience non-convergence during time-steps that include phase transitions.

*Primary Depletion*

The sequential algorithm was first applied with $\Delta t$ = 0.1 day using conventional PT-Flash. At the first outer-loop iteration, the program yielded $p$ = 634 psia and $S_w$ = 0.101257; $S_o$ = 0.85229; $S_g$ = 0.3389. Clearly the volume constraint is not satisfied due to the phase transition of hydrocarbons from single-phase (oil) to two-phase (oil and gas). In order to honor multi-phase Darcy's equation, the hydrocarbon saturations were linearly normalized to $S_o$ = 0.643026 and $S_g$ = 0.2557. This created a large mass error (20.85 %) in linearly normalized saturations and the mass errors did not decrease with iterations. The algorithm failed to converge. These results are very different from those from volume constrained methods or the thermodynamic flux method. The approximation of phase behavior can yield drastic different results for the initial depletion with large pressure drop and phase transition with large volume change.

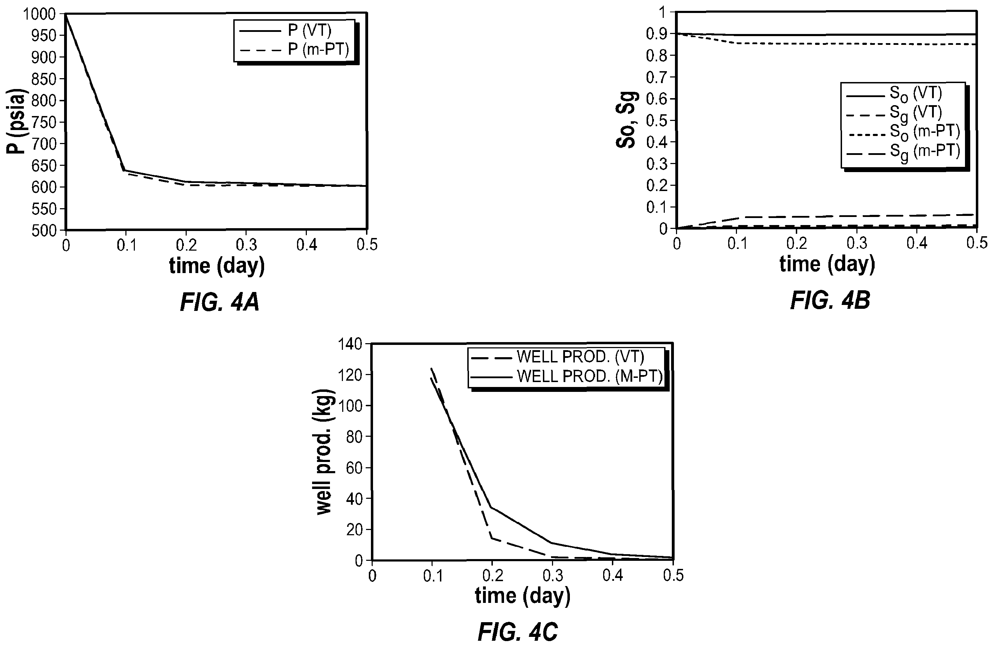

The same problem was then simulated by the sequential algorithm with VT-flash and Modified PT-flash. The initial saturations are given by $S_w$ = 0.1; $S_o$ = 0.9 and $S_g$ = 0 at $p_0$ = 1000 psia and $p_{well}$ = 600 psia. As mass and volume are conserved in both methods, they yielded stable convergence by 1-3 outer loop iterations. In Figs. 4A, 4B, & 4C the cell pressure, oil and gas saturations, and well production rates are plotted for the first 5 time-steps, respectively. The pressure solutions are very similar, but the saturations show noticeable discrepancies between different phase flash approximations. The initial well rates agree in the first time-step, but the subsequent declining rates are different in the second and third time-steps.

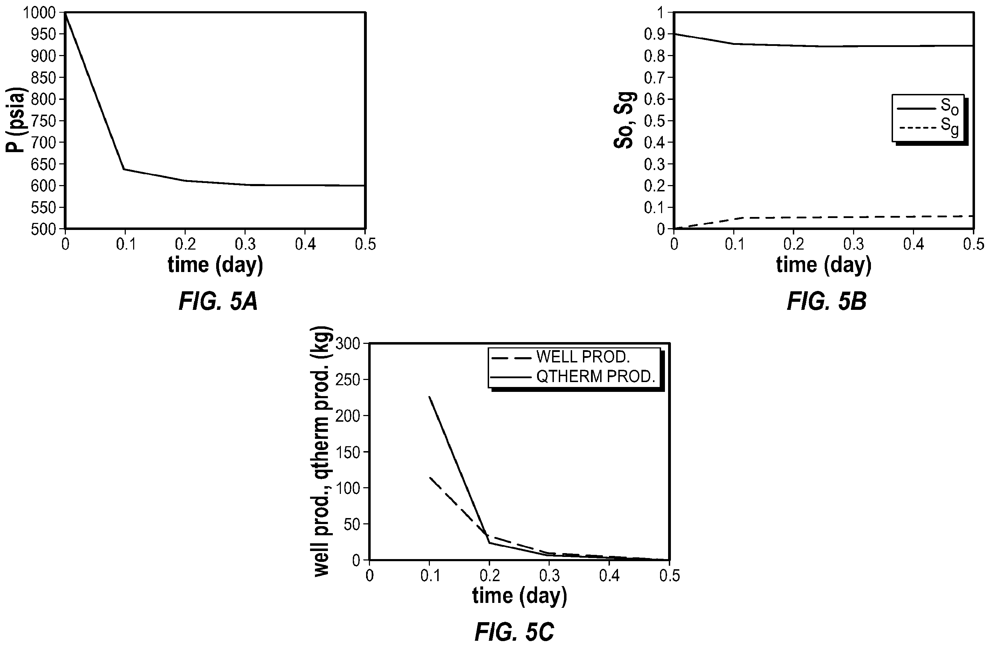

The depletion process was then modeled using the thermodynamic flux, as previously described. The pressure, saturations and well production with thermodynamic flux are plotted in Figs. 5A, 5B, & 5C, respectively. The pressure and saturation developments are similar to the results from VT-flash and modified PT-flash. However, the physical properties of fluids from the VT-flash and modified PT-flash are not in thermodynamic equilibrium. Note the volume is modified to honor the volume constraint. The well production rates from the thermodynamic flux method, as a result, is very different from those from the other two methods. An accurate solution method is the one that follows the physical process with an infinitesimally small time-step size. A single-phase fluid should be produced before the bubble point pressure and then two-phase should be produced gradually. The pore volume constraint will lag the gas production. With the additional degree of freedom of thermodynamic flux, the physical properties at computed pressure and temperature can be recovered.

This simple problem is an extreme test for phase equilibrium because of the large pressure drop (> 450 psia) and phase transition in the first time-step. Note that the numerical difficulty can be easily resolved if a mass/volume conservative flash approximation is applied.

*Example 2: A ten-cell model with production and injection wells*

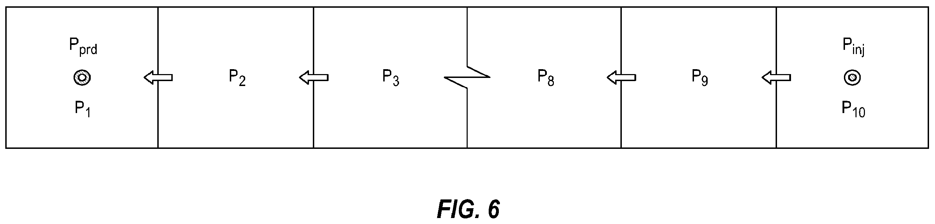

The previous example with three-hydrocarbons *i* is recast to a simple 1-d model of linear displacement. The model is schematically depicted in Fig. 6 in which a water injection well is located at $i = 10$ and a production well at $i = 1$. The initial saturations are given by $S_w = 0.1$; $S_o = 0.9$ and $S_g = 0$. The model was initialized with $p = 1000$ psia and the bottom hole pressures of the injection and production wells were maintained at 1400 and 600 psia, respectively. A constant time-step size, 0.1 day, was employed throughout the simulation. Despite the sudden initial change in pressure and volume, the application of thermodynamic flux renders a stable and convergent numerical solution without time-step cuts.

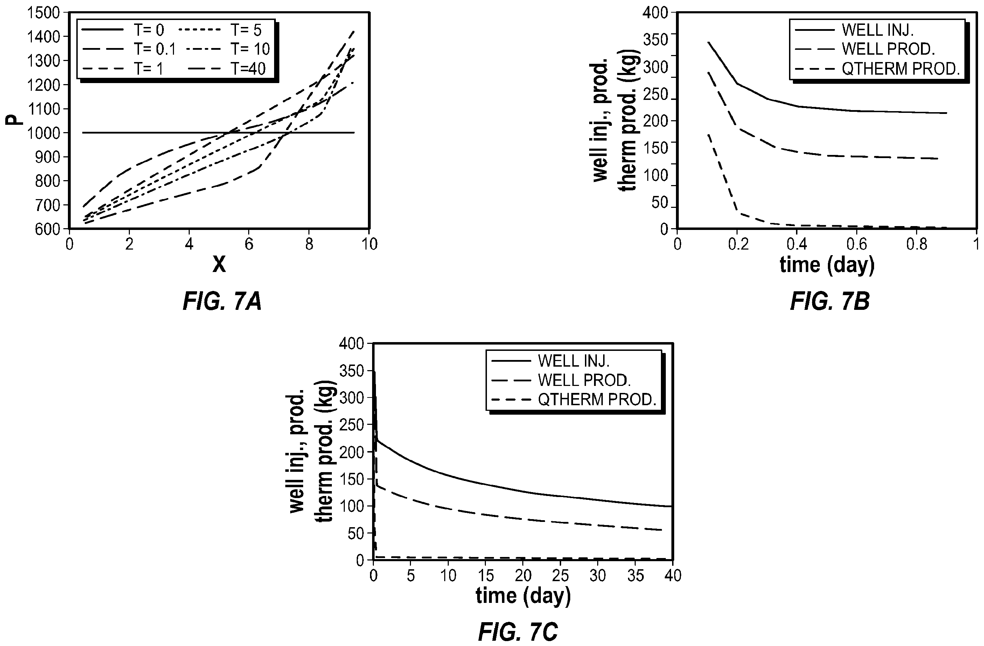

In Fig. 7 the pressure developments (7A) and the well rates (injection and production) and thermodynamic flux for early time (7B) are plotted. The thermodynamic flux is needed to compensate sudden pressure change that incurs additional production of fluid at the early stage of simulation. But in the later time, the thermodynamic flux diminishes quickly as the system becomes in a stable operation mode (Fig. 7C).

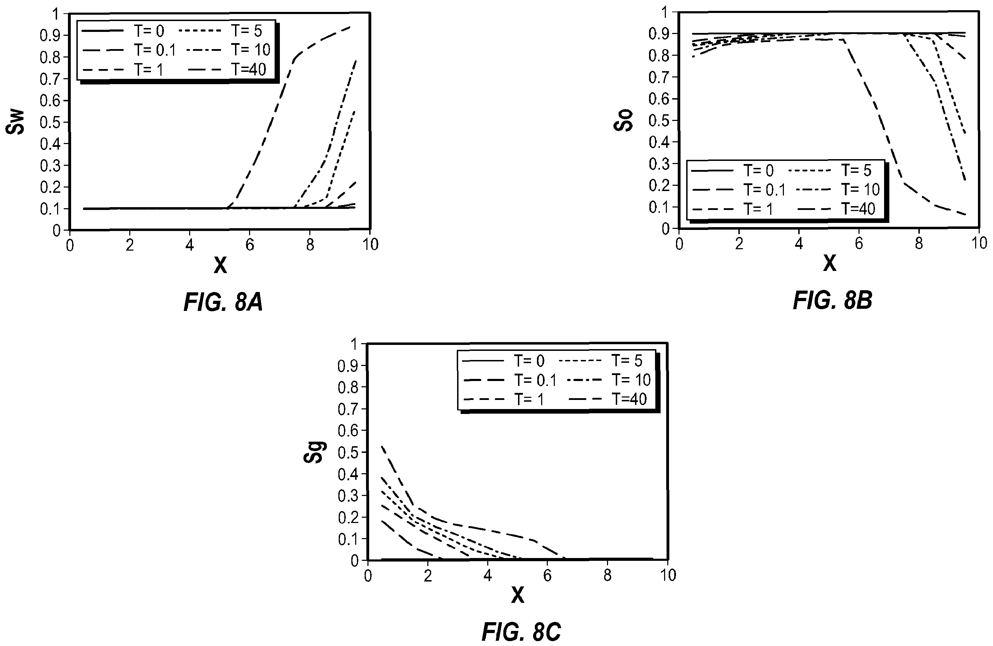

The uniform initial pressure quickly redistributed to honor the well pressures and the profile continuously adjusts to reflect the total mobility of fluids. Note that the viscosities of water, oil and gas are 1, 0.1695, and 0.00126 cp, respectively, at t=40 days. Fig. 8A clearly shows that the pressure gradients reflect the total fluid mobility as the water moves from the injection well. Gas forms from the production wells, as shown in the saturation distributions for water ($S_w$), oil ($S_o$), and gas ($S_g$) in Figs. 8A, 8B, & 8C, respectively.

*Example 3: A one-cell model with miscible gas injection*

This example employs the six-component hydrocarbon fluid of SPE Fifth Comparative Solution Project. The oil composition is $C_1 = 0.50$, $C_3 = 0.03$, $C_6 = 0.07$, $C_{10} = 0.20$, $C_{15} = 0.15$, and $C_{20} = 0.05$, while the injection gas composition is $C_1 = 0.77$, $C_3 = 0.20$, and C6 = 0.03. The detailed physical properties of fluids can be found in the following reference: J. E. Killough and C. A. Kossack. Fifth comparative solution project: Evaluation of miscible flood simulator. In Proceedings of 9th SPE Symposium on Reservoir Simulation: SPE 16000, San Antonio, TX, 1987.

When the oil and injection gas are in contact, they become miscible. Consequently, total fluid volume may shrink due to phase equilibrium. The numerical convergence of the SFI algorithm with a one cell model with a miscible gas injector is therefore examined.

The cell was initialized with pressure at 2500 psia, temperature 160°F, and phase saturation $S_w = 0.2$, $S_o = 0.7999$ and $S_g = 0.0001$, and the gas injector had a constant bottom-hole pressure 2600 psia. The cell size is 10m $\times$ 10m $\times$ 1m and a porosity of 0.2. A constant time-step size of 1 day was employed throughout the simulation.

The actual convergence path in SFI was:

(1) For given initial condition and well operation constraint, the pressure calculation yielded the cell pressure $p_0 = 2599.9044$ psia and the amount of injected gas was 8.9778 kg.
(2) The saturation computation yielded $S_w = 0.199347$; $S_o = 0.798355$ and $S_g = 0.002298$. Due to the low compressibility of oil, the injection amount of gas was limited, $q_{inj} = 8.9778$ kg, and the cell pressure approached close to the well-bore pressure.
(3) The phase equilibrium of hydrocarbons yielded $S_o = 0.799772$ and $S_g = 0$. The gas phase disappeared, and the volume constraint was not satisfied ($S_w + S_o + S_g \neq 1$).
(4) The thermodynamic flux was computed to satisfy the volume constraint: qtherm = 5.81615 kg.
(5) The second iteration brought $p_0 = 2599.84556$ psia and $q_{inj} = 14.7886$ kg, which satisfied the mass and volume conservation of the governing equations.

In this example the thermal flux is an excellent element in obtaining a converged solution that satisfies the governing equations and the volume constraint condition. In sequential compositional simulation, the large fluid volume variation in phase transition is always numerically challenging. Adaption of thermal flux significantly improves numerical convergence for this challenging problem.

*Example 4: A four-cell model with miscible-gas injection and production wells*

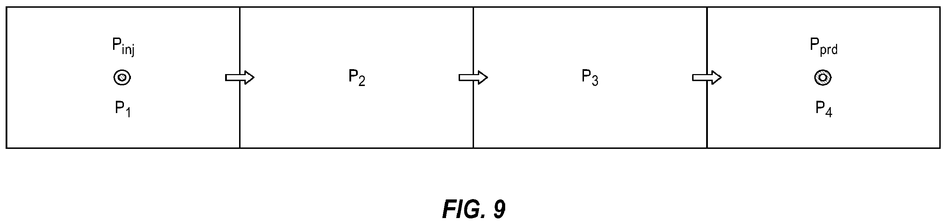

A four cell model is used in example 4 with injection and production wells with fluid model of SPE 5, as in the previous example. The model is schematically depicted in Fig. 9. The model was initialized with $p = 2500$ psia and T = 160°F. As discussed in the previous numerical example, the injection gas is dissolved in oil on first contact.

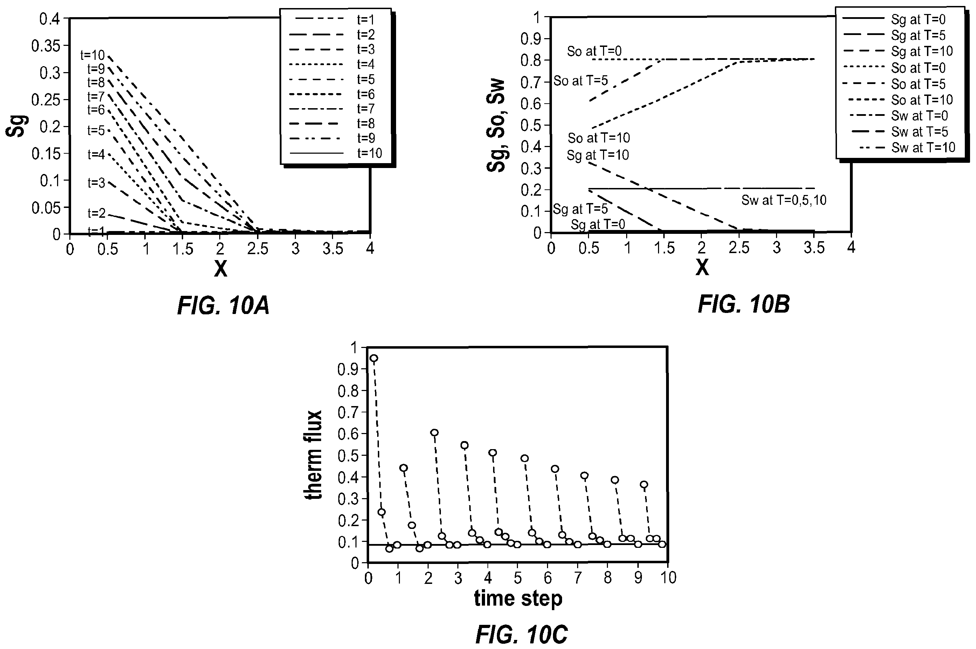

This transition incurs a large volume change. If the saturation equation is solved for all the cells before phase equilibrium calculation, the injection gas invades several cells. This will create unnecessary numerical dispersion. In order to control the numerical dispersion, the saturation of the injection cell and phase equilibrium were first solved to provide a better estimate of saturations and composition. This can be considered as a potential-based reduced Newton algorithm for saturation equation. This potential-based Newton algorithm (see Algorithm 2) is needed for the cells with a large changes of cell properties, i.e., saturations and compositions. It is, thus, employed for the first iteration of the saturation solution loop. The model was simulated for 10 days with a fixed 1-day time-step size. Convergence was typically achieved after 3-5 outer iterations. Initial conditions were $S_w$ = 0.2; $S_o$ = 0.7999, and $S_g$ = 0.0001, and $p$ = 2500 psia at t = 0. The bottom-hole pressures at the injection and production wells are given by 2600 psia and 2400 psia, respectively. The saturation profiles and the thermodynamic flux are depicted over the course of the simulation times in Figs. 10A, 10B and 10C. Note that at the first time-step, all the injection gas was dissolved into oil and the fluid volume was smaller than the pore volume. A thermodynamic flux of injection gas was introduced to satisfy the volume constraint, as shown in Fig. 10C. In Fig. 10A, the gas saturation in cell 1 built up gradually, despite some part of gas was continuously dissolved into oil. Note that the water saturation hardly changed over the simulation. The thermodynamic flux was non-monotonic at the initial time-step (1-4), but monotonically decreased afterwards.

*Example 5: A 2-d model with miscible-gas injection well and production wells*

A 2-dimensional model was considered to investigate the gravitational effect in multi-phase, compositional flow. The physical dimension of the model is 100m $\times$ 100m $\times$ 1m that is uniformly discretized over 10 $\times$ 10 grids. As in Cases 3 and 4, the 6-component hydrocarbon fluid of SPE Fifth Comparative Solution Project was employed. The model was initialized with $S_o$ = 1 and $S_w$ = $S_g$ = 0.0 at $p_0$ = 2500 psia and T = 160°F. The wells are located at the corners of the model with constant pressure constraint: the injection well at (1,1) with $p_{well}^{inj} = 2600$ psia and the production well at (10,10) with $p_{well}^{prd} = 2400$ psia. To demonstrate the complex interaction of multiphase flow equilibrium under gravity, water phase was not included in this example.

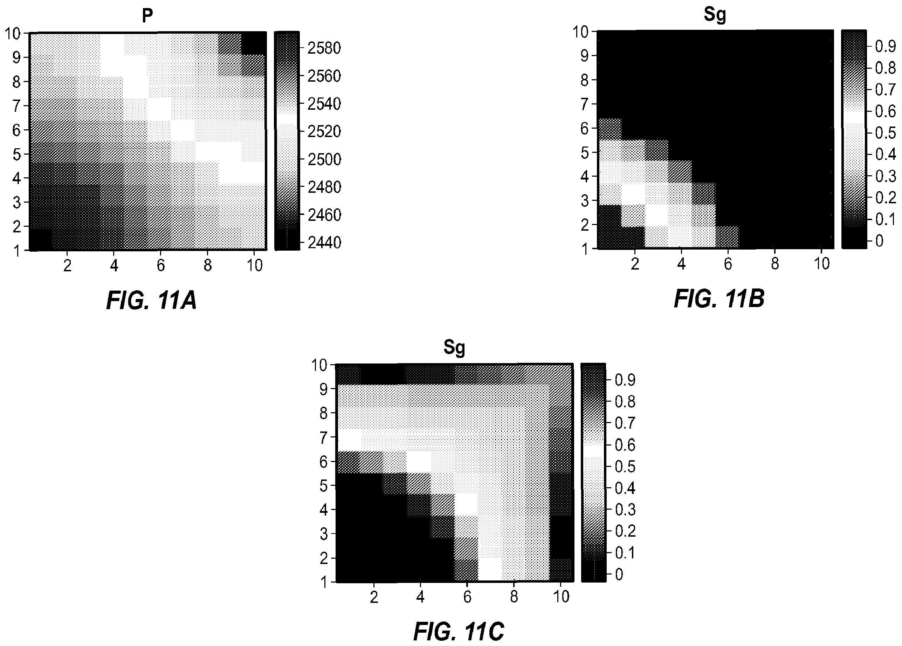

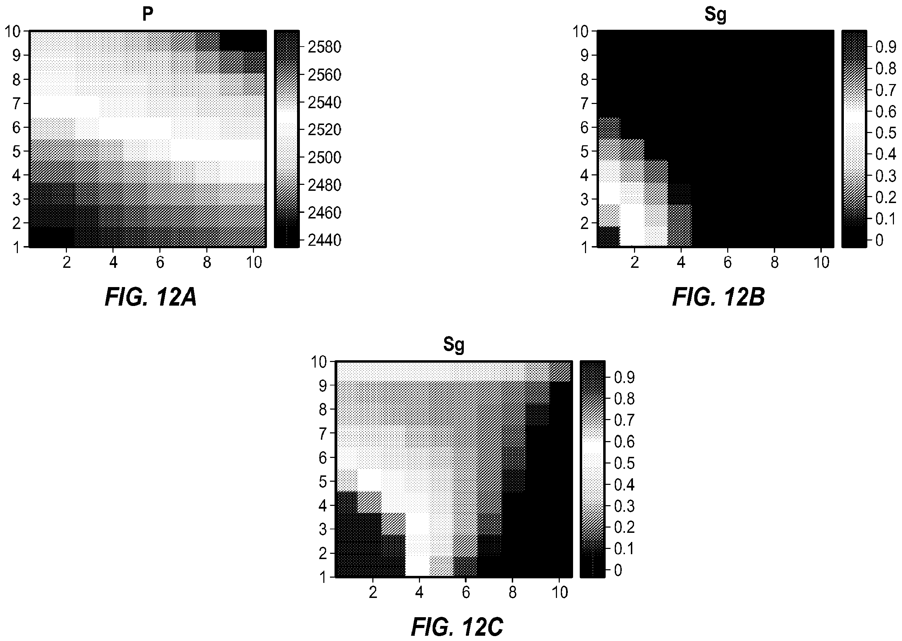

This model was first simulated without gravity and the results are shown in Fig. 11: (11A) $p$ at t=100 days; (11B) $S_g$ at 100 days; and (11C) $S_g$ at 400 days. Note that the diagonal symmetry of the solution was strictly honored. The results with gravity are shown in Fig. 12. The pressure and gas saturation distribution in the presence of gravity were very different from those with no gravity. As the injected gas interacted with oil phase, the system became two phase. The gas phase moved in vertical direction due to buoyancy. Furthermore, it is noted that the gas injection and production rates between these two cases were different due to the different potential differences at well location with or without gravity. The density and viscosity of gas phase was much smaller than those of oil phase. In Figs. 12B and 12C the buoyancy effect was clearly visible, as the gas phase moves in the vertical direction away from the injection well.

In the early stage of simulation, the phase behavior is complex around well as the gas phase becomes miscible with oil. Numerically, Algorithm 2 is more expensive than Algorithm 1. Algorithm 2 is applied only for the injection cell (1,1) and two downstream cells (2,1) and (1,2). The thermodynamic flux efficiently stabilized the numerical calculation, allowing a time-step of 1 day fixed with 1 day throughout simulation. The algorithm took 4-6 outer iterations to converge, on average.

**Additional Remarks**

Most general purpose reservoir simulators adapt the compositional formulation as it can model compositional effect in complex physical process. The black-oil formulation can be included as a simplified form of the compositional formulation. In general, the time scale for phase equilibrium is assumed to be much smaller than the characteristic time of the transport process. The phase equilibrium is commonly computed by Equation of State (EoS), e.g., Peng-Robinson EoS.

As discussed above, observing that components within a phase are displaced with the same velocity at grid cell interfaces, simplified governing equations for compositional flow that are similar to those for black-oil formulation are utilized. Since the characteristics of transport equation and the equation of state are distinctly different, a sequential algorithm is developed, which separates each process into a dedicated solution method. Nonetheless, it has been a real challenge to develop a robust and efficient sequential algorithm because the previous sequential algorithms could not strictly satisfy all the governing equations, mass and volume conservations and phase equilibrium. If the fluid goes through a phase transition that involves a large volume change, conventional sequential algorithms need many iterations or fails to converge. This indicates that the governing equation may not capture the significant volume change associated with phase transition. Based on this observation, some embodiments include a new degree of freedom, "thermodynamic flux", to represent the phase equilibrium in a confined space.

Two algorithms for Sequential, Fully Implicit Method for compositional simulation are demonstrated: (1) In the first algorithm, all the process are solved sequentially; pressure, saturation, components, and phase equilibrium, (2) The second algorithm reorders the cells based on upwind direction, and saturation, component and phase equilibrium for each cell are solved in sequence, in serial manner. It is noted that Algorithm 2 can be expensive in modern hardware that exploits parallel and vector computation. The second algorithm can, thus, be used only for cells which experience phase transition at the first iteration of the time-step. This improves numerical stability while minimizing numerical dispersion during sequential computation of saturation and phase equilibrium calculations.

In a close examination of simulation runs, it is numerically showed that the conventional compositional formulation with instantaneous phase equilibrium is incomplete in describing the phase transition with a large volume change. This is identified as the prime cause that the previous sequential algorithms fail to converge in phase transition. A new degree of freedom, "thermodynamic flux" that resolves the non-convergence issue in the sequential algorithm is utilized in some embodiments. Furthermore, the thermodynamic flux accelerates convergence of nonlinear iterative schemes.

Embodiments are applied to numerically challenging problems with phase transition accompanied by fluid volume changes; rapid primary depletion and miscible gas injection. The first case involves a large volume increase, and the second case includes a fluid volume decrease as gas dissolves on contact with oil. Embodiments successfully resolve these challenging phase flow problems. In addition, embodiments are tested with a 2-dimensional, miscible flooding example with and without gravity.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated.

## Claims

1. A computer-implemented method (100) for performing compositional reservoir simulation on a model of a subterranean reservoir partitioned into a plurality of cells each representing a reservoir volume associated with one or more reservoir characteristics, the method (100) comprising:

    computing (110), sequentially, for the plurality of cells 1) pressure, 2) saturation, 3) component balance, and 4) phase equilibrium to solve for movement of liquid and gas phases over a series of time-steps in the plurality of cells to represent fluid flow within the subterranean reservoir, wherein the computing (110) further comprises fixing all molecular components in each of the liquid and gas phases to move with an equivalent phase velocity, and using a single transport equation for each phase; and
    utilizing the movement of liquid and gas phases that represents the fluid flow within the subterranean reservoir for hydrocarbon production.

2. The method (100) of claim 1, wherein computing over the series of time-steps is repeated until a convergence criteria is satisfied.

3. The method (100) of claim 1, wherein utilizing the movement of liquid and gas phases that represents the fluid flow within the subterranean reservoir for hydrocarbon production includes:

    designing or drilling wells in the subterranean reservoir;
    forecasting hydrocarbon production in the subterranean reservoir;
    controlling flow of fluids in the subterranean reservoir; or
    making reservoir management decisions for the subterranean reservoir.

4. The method (100) of claim 1, further comprising updating the saturation based on the computed phase equilibrium.

5. The method (100) of claim 4, further comprising:

    reordering the plurality of cells based on upwind direction to define a permutation matrix;
    wherein the 2) saturation, 3) component balance, and 4) phase equilibrium are computed, sequentially, using the permutation matrix to solve for the movement of the liquid and gas phases in each of the plurality of cells.

6. The method (100) of claim 5, wherein thermodynamic fluxes for each of the plurality of cells are accounted for when computing the phase equilibrium.

7. The method (100) of claim 6, wherein the thermodynamic fluxes between adjacent cells are computed based on a difference between fluid volume and pore volume.

8. The method (100) of claim 7, wherein an Equation of State, EoS, is used for computing the phase equilibrium.

9. The method (100) of claim 8, wherein fluid density is modified to conserve mass and volume while computing the phase equilibrium.

10. The method (100) of claim 9, wherein the phase equilibrium is only solved for in phase transition cells, cells in a two-phase region, or cells during a first iteration in a time-step.

11. The method (100) of claim 10, wherein a multiscale finite volume framework is utilized for partitioning the model of the subterranean reservoir and solving for the movement of the liquid and gas phases.

12. A system (200) for performing compositional reservoir simulation on a model of a subterranean reservoir partitioned into a plurality of cells each representing a reservoir volume associated with one or more reservoir characteristics, the system comprising:

a processor (202); and
a memory (206) communicatively connected to the processor (202), the memory (206) storing computer-executable instructions which, when executed, cause the processor (202) to perform the method of any of claims 1 to 11.

13. One or more computer programs comprising instructions which, when executed by a computer, cause the computer to carry out the method of any of claims 1 to 11.

14. A non-transitory computer-readable storage medium (206) having the one or more computer programs of claim 13 stored thereon.

**Patentansprüche**

1. Computerimplementiertes Verfahren (100) zum Durchführen einer Kompositreservoirsimulation an einem Modell eines unterirdischen Reservoirs, das in eine Vielzahl von Zellen unterteilt ist, die jeweils ein Reservoirvolumen darstellen, das mindestens einer Reservoireigenschaft zugeordnet ist, das Verfahren (100) Folgendes umfassend:

sequentielles Berechnen (110) für die Vielzahl von Zellen von 1) Druck, 2) Sättigung, 3) Komponentenausgleich und 4) Phasengleichgewicht, um die Bewegung von Flüssig- und Gasphasen über eine Reihe von Zeitschritten in der Vielzahl von Zellen zu lösen, um den Fluidstrom innerhalb des unterirdischen Reservoirs darzustellen, wobei das Berechnen (110) weiterhin Fixieren aller molekularen Komponenten in jeder der Flüssig- und Gasphasen, um sich mit einer äquivalenten Phasengeschwindigkeit zu bewegen, und Verwenden einer einzelnen Transportgleichung für jede Phase umfasst; und
Einsetzen der Bewegung der Flüssig- und Gasphasen, die den Fluidstrom innerhalb des unterirdischen Reservoirs zur Kohlenwasserstoffproduktion darstellt.

2. Verfahren (100) nach Anspruch 1, wobei Berechnen über die Reihe von Zeitschritten wiederholt wird, bis ein Konvergenzkriterium erfüllt ist.

3. Verfahren (100) nach Anspruch 1, wobei Einsetzen der Bewegung der Flüssig- und Gasphasen, die den Fluidstrom innerhalb des unterirdischen Reservoirs zur Kohlenwasserstoffproduktion darstellt, Folgendes umfasst:

Entwerfen oder Bohren von Bohrlöchern in das unterirdische Reservoir;
Prognostizieren einer Kohlenwasserstoffproduktion in dem unterirdischen Reservoir;
Steuern eines Stroms von Fluiden in dem unterirdischen Reservoir; oder
Treffen von Reservoirmanagemententscheidungen für das unterirdische Reservoir.

4. Verfahren (100) nach Anspruch 1, weiterhin Aktualisieren der Sättigung auf Grundlage des berechneten Phasengleichgewichts umfassend.

5. Verfahren (100) nach Anspruch 4, weiterhin Folgendes umfassend:

Umordnen der Vielzahl von Zellen auf Grundlage einer Luvrichtung, um eine Permutationsmatrix zu definieren; wobei 2) Sättigung, 3) Komponentenausgleich und 4) Phasengleichgewicht unter Verwendung der Permuta-

27

tionsmatrix sequentiell berechnet werden, um die Bewegung der Flüssig- und Gasphasen in jeder der Vielzahl von Zellen zu lösen.

6. Verfahren (100) nach Anspruch 5, wobei thermodynamische Flüsse für jede der Vielzahl von Zellen berücksichtigt werden, wenn das Phasengleichgewicht berechnet wird.

7. Verfahren (100) nach Anspruch 6, wobei die thermodynamischen Flüsse zwischen benachbarten Zellen auf Grundlage einer Differenz zwischen Fluidvolumen und Porenvolumen berechnet werden.

8. Verfahren (100) nach Anspruch 7, wobei eine Zustandsgleichung, Equation of State, EoS, zum Berechnen des Phasengleichgewichts verwendet wird.

9. Verfahren (100) nach Anspruch 8, wobei die Fluiddichte modifiziert wird, um Masse und Volumen zu erhalten, während das Phasengleichgewicht berechnet wird.

10. Verfahren (100) nach Anspruch 9, wobei das Phasengleichgewicht nur in Phasenübergangszellen, Zellen in einem zweiphasigen Bereich oder Zellen während einer ersten Iteration in einem Zeitschritt gelöst wird.

11. Verfahren (100) nach Anspruch 10, wobei eine endliche Mehrskalenvolumenstruktur verwendet wird, um das Modell des unterirdischen Reservoirs zu unterteilen und die Bewegung der Flüssig- und Gasphasen zu lösen.

12. System (200) zum Durchführen einer Kompositreservoirsimulation an einem Modell eines unterirdischen Reservoirs, das in eine Vielzahl von Zellen unterteilt ist, die jeweils ein Reservoirvolumen darstellen, das mindestens einer Reservoireigenschaft zugeordnet ist, das System Folgendes umfassend:

   einen Prozessor (202); und
   einen Speicher (206), der kommunikativ mit dem Prozessor (202) verbunden ist, wobei der Speicher (206) computerausführbare Anweisungen speichert, die, wenn sie ausgeführt werden, bewirken, dass der Prozessor (202) das Verfahren nach einem der Ansprüche 1 bis 11 durchführt.

13. Mindestens ein Computerprogramm, Anweisungen umfassend, die beim Ausführen durch einen Computer den Computer zum Durchführen des Verfahrens nach einem der Ansprüche 1 bis 11 veranlassen.

14. Nichtflüchtiges computerlesbares Speichermedium (206), auf dem das mindestens eine Computerprogramm nach Anspruch 13 gespeichert ist.


**Revendications**

1. Procédé informatisé (100) permettant d'effectuer une simulation de réservoir de composition sur un modèle d'un réservoir souterrain divisé en une pluralité de cellules représentant chacune un volume de réservoir associé à une ou plusieurs caractéristiques de réservoir, le procédé (100) comprenant :

   le calcul (110), séquentiel, pour la pluralité de cellules des 1) pression, 2) saturation, 3) équilibre des composants, et 4) équilibre de phase pour résoudre le mouvement des phases liquide et gazeuse sur une série de pas de temps dans la pluralité de cellules pour représenter l'écoulement de fluides dans le réservoir souterrain, le calcul (110) comprenant en outre la fixation de tous les composants moléculaires dans chacune des phases liquide et gazeuse pour qu'ils se déplacent avec une vitesse de phase équivalente, et l'utilisation d'une équation de transport unique pour chaque phase ;
   et
   l'utilisation du mouvement des phases liquide et gazeuse qui représente l'écoulement de fluides dans le réservoir souterrain pour la production d'hydrocarbures.

2. Procédé (100) selon la revendication 1, le calcul sur la série de pas de temps étant répété jusqu'à ce qu'un critère de convergence soit satisfait.

3. Procédé (100) selon la revendication 1, l'utilisation du mouvement des phases liquide et gazeuse qui représente l'écoulement de fluides à l'intérieur du réservoir souterrain pour la production d'hydrocarbures comprenant :

la conception ou le forage de puits dans le réservoir souterrain ;
la prévision de la production d'hydrocarbures dans le réservoir souterrain ;
la commande de l'écoulement de fluides dans le réservoir souterrain ; ou
la prise de décisions en matière de gestion du réservoir souterrain.

**4.** Procédé (100) selon la revendication 1, comprenant en outre la mise à jour de la saturation sur la base de l'équilibre de phase calculé.

**5.** Procédé (100) selon la revendication 4, comprenant en outre :

le réordonnancement de la pluralité de cellules sur la base de la direction du vent ascendant pour définir une matrice de permutation ;
2) la saturation, 3) l'équilibre des composants et 4) l'équilibre de phases étant calculés séquentiellement à l'aide de la matrice de permutation pour déterminer le mouvement des phases liquide et gazeuse dans chacune de la pluralité de cellules.

**6.** Procédé (100) selon la revendication 5, les flux thermodynamiques pour chacune de la pluralité de cellules étant pris en compte lors du calcul de l'équilibre de phase.

**7.** Procédé (100) selon la revendication 6, les flux thermodynamiques entre des cellules adjacentes étant calculés sur la base d'une différence entre le volume de fluide et le volume de pores.

**8.** Procédé (100) selon la revendication 7, une équation d'état, EOS, étant utilisée pour calculer l'équilibre de phase.

**9.** Procédé (100) selon la revendication 8, la densité du fluide étant modifiée pour conserver la masse et le volume tout en calculant l'équilibre de phase.

**10.** Procédé (100) selon la revendication 9, l'équilibre de phase n'étant résolu que pour des cellules en transition de phase, des cellules dans une région à deux phases, ou des cellules pendant une première itération dans un pas de temps.

**11.** Procédé (100) selon la revendication 10, une structure de volume fini à échelles multiples étant utilisée pour diviser le modèle du réservoir souterrain et résoudre le mouvement des phases liquide et gazeuse.

**12.** Système (200) permettant d'effectuer une simulation de réservoir de composition sur un modèle d'un réservoir souterrain divisé en une pluralité de cellules représentant chacune un volume de réservoir associé à une ou plusieurs caractéristiques de réservoir, le système comprenant :

un processeur (202) ; et
une mémoire (206) connectée de manière communicative au processeur (202), la mémoire (206) stockant des instructions exécutables par ordinateur qui, lorsqu'elles sont exécutées, amènent le processeur (202) à réaliser le procédé selon l'une quelconque des revendications 1 à 11.

**13.** Programme informatique ou programmes informatiques comprenant des instructions qui, lorsqu'elles sont exécutées par un ordinateur, amènent l'ordinateur à mettre en œuvre le procédé selon l'une quelconque des revendications 1 à 11.

**14.** Support (206) de stockage non transitoire lisible par ordinateur sur lequel sont stockés le ou les programmes informatiques selon la revendication 13.

100 ⌐

┌─ 105
PROVIDING A MODEL OF A SUBTERRANEAN RESERVOIR
PARTITIONED INTO A PLURALITY OF CELLS EACH
REPRESENTING A RESERVOIR VOLUME ASSOCIATED
WITH ONE OR MORE RESERVOIR CHARACTERISTICS

┌─ 110
COMPUTING, SEQUENTIALLY, FOR THE PLURALITY OF CELLS:
1) PRESSURE
2) SATURATION
3) COMPONENT BALANCE
4) PHASE EQUILIBRIUM
TO SOLVE FOR MOVEMENT OF LIQUID AND GAS
PHASES OVER A SERIES OF TIME STEPS IN
THE PLURALITY OF CELLS TO REPRESENT FLUID
FLOW WITHIN THE SUBTERRANEAN RESERVOIR

┌─ 115
GENERATING A VISUAL OUTPUT REPRESENTING
FLUID FLOW WITHIN THE SUBTERRANEAN
RESERVOIR FOR VIEWING BY ONE OR MORE USERS

*FIG. 1*

**FIG. 2**

*FIG. 3A*

*FIG. 3B*

FIG. 4A

FIG. 4B

FIG. 4C

FIG. 5A

FIG. 5B

FIG. 5C

**FIG. 6**

**FIG. 7A**

**FIG. 7B**

**FIG. 7C**

EP 4 136 322 B1

FIG. 8A

FIG. 8B

FIG. 8C

EP 4 136 322 B1

*FIG. 9*

| $P_4$ $P_{prd}$ ⊚ | $P_3$ ⇐ | $P_2$ ⇐ | $P_1$ ⊚ $P_{inj}$ ⇐ |
|---|---|---|---|

**FIG. 10A**

**FIG. 10B**

**FIG. 10C**

**P**

**FIG. 11A**

**Sg**

**FIG. 11B**

**Sg**

**FIG. 11C**

**FIG. 12A**

**FIG. 12B**

**FIG. 12C**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2002177986 A1

**Non-patent literature cited in the description**

- Sequential Fully Implicit Formulation for Compositional Simulation using Natural Variables. **MONCORGE et al.** ARXIV.ORG. CORNELL UNIVERSITY LIBRARY, 05 April 2018

- Modified sequential fully implicit scheme for compositional flow simulation. **MONCORGE et al.** JOURNAL OF COMPUTATIONAL PHYSICS. 20 February 2017, vol. 337, 98-115